(19) Europäisches Patentamt

European Patent Office

Office européen des brevets

(11) **EP 4 697 056 A1**

(12) **EUROPEAN PATENT APPLICATION**

(43) Date of publication:
**18.02.2026 Bulletin 2026/08**

(21) Application number: **24275098.2**

(22) Date of filing: **15.08.2024**

(51) International Patent Classification (IPC):
**G01S 5/02** (2010.01)        **G01S 5/06** (2006.01)
**G01S 5/00** (2006.01)

(52) Cooperative Patent Classification (CPC):
**G01S 5/02213; G01S 5/06;** G01S 5/0009;
G01S 5/0246

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not
yet been filed**

(74) Representative: **BAE SYSTEMS plc
Group IP Department
Victory Point
Frimley
Camberley, Surrey GU16 7EX (GB)**

(54) **SIGNAL SOURCE POWER ESTIMATION**

(57)     The application relates to a method of determining the power of an electromagnetic signal emission. Also disclosed is a system comprising apparatus for carrying out the method, and a computer-readable medium storing a computer program for carrying out the method. The method includes obtaining a plurality of datasets each comprising a plurality of successive samples of the electromagnetic signal as received at a corresponding receiver, and for each of one of more pairs of the datasets: determining a first received power being that of a first dataset of the respective pair; determining a second received power being that of a dataset of the respective pair; ensuring that the signals represented in the first and second datasets of the respective pair are band-pass filtered according to a predetermined frequency range, thereby obtaining first and second filtered datasets; determining a respective peak of a correlation function between the first and second filtered datasets, wherein determining the respective peak comprises searching for a maximum of the correlation function while varying at least a time offset between samples of the first filtered dataset and samples of the second filtered dataset; and determining, based on the respective peak value of the correlation function, a respective sum of a signal component power of the first filtered dataset and a signal component power of the second filtered dataset.

Figure 1

## Description

**Field**

The present disclosure relates to a method of processing data for estimating a location of a source of an electromagnetic signal, such as a radio signal, said data comprising a plurality of datasets, each dataset being representative of the signal as received at a respective one of a plurality of vehicles. Also disclosed is an apparatus and a computer program arranged for carrying out said method, and a computer-readable medium storing such a computer program.

**Background**

It can be desirable to locate a source of an electromagnetic signal emission, e.g. a radio signal transmission, for example a signal source located somewhere on or near the Earth's surface in the case of ground-based or marine-based signal sources, or a signal source in free space. Passive location (e.g. without any requirement to attach a tracking beacon to the source) can be achieved by monitoring for reception of the signal at a plurality of receivers (e.g. usually at least three receivers, typically carried on separate vehicles). The signal, as received at each of the plurality of receivers, can be digitally sampled, such that a sampled data stream corresponding to the received signal is produced by each receiver. The plurality of resulting sampled data streams can then be provided to a processing unit/entity for processing. When the positions of said receivers are known, techniques such as multilateration can be used at the processing unit/entity to estimate the location (e.g. a "geolocation" which is a position on the Earth's surface, or a position in free space) of the signal source, based on differential factors such as the Time Difference Of Arrival (TDOA) between reception of the signal at each of the receivers. It is desirable that position estimation accuracy and operating efficiency are maximised, however, existing systems and methods have hitherto failed to perform completely satisfactorily. The present disclosure aims to alleviate, at least to an extent, problems associated with existing technology.

**Summary**

According to a first aspect of the present disclosure there is provided a computer-implemented method of determining the power of an electromagnetic signal emission, the method comprising obtaining a plurality of datasets each comprising a plurality of successive samples of the electromagnetic signal as received at a corresponding receiver, and for each of one or more pairs of the datasets:

> determining a first received power being that of a first dataset of the respective pair;
> determining a second received power being that of a dataset of the respective pair;
> ensuring that the signals represented in the first and second datasets of the respective pair are band-pass filtered according to a predetermined frequency range, thereby obtaining first and second filtered datasets;
> determining a respective peak of a correlation function between the first and second filtered datasets, wherein determining the respective peak comprises searching for a maximum of the correlation function while varying at least a time offset between samples of the first filtered dataset and samples of the second filtered dataset; and
> determining, based on the respective peak value of the correlation function, a respective sum of a signal component power of the first filtered dataset and a signal component power of the second filtered dataset.

Optionally, the method further comprises normalising the first and second received powers to a respective normalised power.
Optionally, determining the first received power and determining the second received power each comprise calculating a mean of the square of the module of a set of samples in the respective dataset.
Optionally, determining the respective peak of the correlation function comprises searching for a maximum of the correlation function while also varying a frequency offset between samples of the first filtered dataset and samples of the second filtered dataset.
Optionally, the method further comprises determining, based upon the respective computed sum of the signal component power of the first filtered dataset and the signal component power of the second filtered dataset, a respective Effective Signal to Noise Ratio (ESNR) value of the respective pair of datasets. Optionally, the respective ESNR value is further based upon the respective peak of the correlation function, and on a ratio of the predetermined frequency range over an estimated data symbol rate that is based upon the predetermined frequency range.
Optionally, the number of datasets is two, and the number of dataset pairs is one. Optionally, the signal component power of the first filtered dataset and the signal component power of the second filtered dataset are assumed to be the same and both equal to the peak value of the correlation function.

Optionally, the number of datasets is three, and the number of dataset pairs is three.

Optionally, the number of datasets is four, and the number of dataset pairs is six.

Optionally, the method further comprises using the respective ESNR values to determine a Standard Deviation Error of TDOA, FDOA and/or DRDOA calculations that are based upon the first and second datasets of the respective pair. Optionally, the respective Standard Deviation Errors are used to generate a whitening function that is usable to whiten the respective TDOA, FDOA and/or DRDOA calculations such that they have a zero mean Gaussian error distribution with a homoscedastic error covariance matrix.

Optionally, each dataset is obtained from a respective vehicle having a receiver for receiving the electromagnetic signal.

Optionally, the predetermined frequency range is a channel bandwidth value. Optionally, the channel bandwidth value is a marine communications channel bandwidth value. Optionally, the channel bandwidth value is 25kHz.

Optionally, the estimated data symbol rate is, at most, half of the predetermined frequency range.

Optionally, the electromagnetic signal emission is a radio signal transmission.

In a second aspect there is provided a computer system comprising one or more processors, the one or more processors configured to carry out a method according to the first aspect.

In a third aspect there is provided a system comprising the computer system of the second aspect, and further comprising receiving apparatus for receiving the plurality of datasets from respective ones of a plurality of vehicles.

Optionally, each of said plurality of vehicles is capable of receiving and sampling the electromagnetic signal, wherein a respective one of the plurality of datasets comprising the sampled electromagnetic signal is transmitted by the respective vehicle to a processing unit.

Optionally, each of said vehicles is capable of being controlled to move in a respective path. Optionally, the path is an orbital path around the Earth.

Optionally, each of said vehicles is capable of determining its position, and the respective one of the plurality of datasets further comprises the respective determined position.

Optionally, wherein the system further comprises the plurality of vehicles.

In a fourth aspect there is provided a computer program product comprising instructions which when executed by one or more processors causes the one or more processors to carry out a method in accordance with the first aspect.

In a fifth aspect there is provided a computer-readable medium storing instructions which when executed by one or more processors causes the one or more processors to carry out a method in accordance with the first aspect.

It will be appreciated in the light of the present disclosure that certain features of certain aspects and/or embodiments described herein can be advantageously combined with those of other aspects and/or embodiments. The following description of specific embodiments should not therefore be interpreted as indicating that all of the described steps and/or features are essential. Instead, it will be understood that certain steps and/or features are optional by virtue of their function or purpose, even where those steps or features are not explicitly described as being optional. The above aspects are thus not intended to limit the scope of the present invention which is instead defined by the appended claims.

**Description of Figures**

Aspects of the disclosure may be carried out in various ways and some preferred embodiments will now be described by way of example only and in a non-limiting way with reference to the accompanying drawings, in which:

Figure 1 is a perspective view of a cluster of vehicles, said vehicles having their movement and relative positions controlled so as to maintain a fixed arrangement relative to each other, said vehicles provided for receiving an electromagnetic signal, such as a radio signal, and producing a sample stream of data values representative of successive samples of a property of said signal.

Figure 2 is an illustration of such a signal source, said source located within a common coverage area of the cluster of vehicles, the Figure also showing individual vehicle coverage areas.

Figure 3 is a schematic representation of an example "Geolocation Management System" (GMS) including a processing unit for processing sampled data streams obtained from a plurality of vehicles, so as to passively estimate (using techniques described herein) a location of a source of the signal received by the plurality of vehicles, said location optionally being either a geolocation or a location in free space.

Figure 4 shows a representation of a radio frequency band divided into discrete radio channel frequency sub-bands which are separable by bandpass filtering.

Figure 5 is a schematic diagram showing a general flow of steps performed as part of a method of processing data for estimating a location of a source of an electromagnetic signal, specifically steps performed for searching for an adjustment factor that maximises a correlation function, in order to determine alignment of a pair of sample streams.

Figure 6 is a flow diagram depicting specific method steps corresponding to the method described with respect to Figure 5.

Figure 7 is a block diagram showing in general terms an interconnected flow of elements used in a method of processing data for estimating a location of a source of an electromagnetic signal, specifically wherein the method includes searching for a maximum of a correlation function, wherein the correlation function is based upon a system of equations involving TDOA, FDOA and DRDOA, which system of equations has been whitened by a whitening matrix in order to aid convergence of the search.

Figure 8 is a representation of a special case of a signal source position, that being when the signal source is geolocated and thus constrained to lie on the Earth's surface.

Figure 9 is a flow diagram depicting specific method steps corresponding to the method described with respect to Figure 7.

Figure 10 is a flow diagram depicting steps of a method for determining transmitter power.

**Detailed Description**

Passively locating a source of an electromagnetic signal emission such as a radio signal transmission (passive meaning without any need to tag the source with a position determining apparatus such as a GPS receiver, and without any need to transmit a signal towards the source), on or near the Earth's surface (termed "geolocating"), or in free space, can be achieved by monitoring for reception of the signal at a plurality of receivers having known positions. Multilateration techniques can be used to determine the position of said signal source based on differential factors such as Time Difference Of Arrival (TDOA) between reception of the signal at each of the receivers. Such multilateration techniques, and others such as Frequency Difference of Arrival (FDOA), can be used to estimate a location of a "target" signal source, and require the combination and processing of data from multiple receivers of the signal to provide location estimation.

To increase geographical coverage, said receivers are typically mounted on vehicles such as aircraft, marine vessels, or advantageously on orbiting spacecraft (e.g. spacecraft flying in Low Earth Orbit). Said advantages of spacecraft include greater geographical coverage resulting from greater height above the Earth's surface, and low propulsion requirements due to low levels of friction in space. Various formations of satellite-mounted receivers can be employed, e.g. "trailing" formations comprising multiple satellites orbiting on the same path and separated by a specific time interval, "cluster" formations comprising multiple satellites in a dense arrangement, and "constellation" formations comprising several satellites with coordinated ground coverage, operating together under shared control. It has been found that accuracy, geographical coverage area, and (to an extent) operational efficiency, depend upon the number of receivers employed, their spatial separation, and their geometric arrangement relative to each other.

Each vehicle employs a detector, such as an omnidirectional VHF (very high frequency) antenna, to capture electromagnetic signals, such as radio signals, transmitted or emitted by a signal source of interest. Typically, the signal captured (i.e. received) by a particular vehicle's antenna is successively sampled at discrete intervals in accordance with a sampling "clock" signal (e.g. an oscillating signal having a fixed frequency) that is local to the particular vehicle, resulting in a sample stream consisting of a series of data values. Each such data value, or "sample", captured at each sample time (e.g. upon each rising and/or falling edge of the sampling clock signal), corresponds to a sampled property of the received signal, for example amplitude, phase and/or frequency. In other words, at each vehicle, a sampling clock of a predetermined frequency is used to successively sample the signal (e.g. a property of the signal such as one or more of amplitude, phase and frequency) as received at the respective vehicle, to produce a stream of data values, termed a sample stream. The vehicle typically timestamps some or all of the data values, e.g. by including time information (termed "timestamp data") in the sample stream, said timestamp data associated with particular data sample values and indicating a time at which each of the particular data values was sampled. The time information in the timestamps can for example be obtained by the vehicle from GNSS (Global Navigation Satellite System) transmissions that the vehicle periodically receives, and may be augmented by time information generated on-board the vehicle (e.g. by a free-running clock that may or may not be updated/synchronised each time GNSS information is received).

The plurality of resulting sampled data streams are then provided to a processing unit (which can be termed a location estimator), for processing to estimate a location of the source of the signal. With knowledge of the positions of the receivers, the processing unit employs multilateration techniques to estimate the location (e.g. the position on the Earth's surface) of the signal source, based on differential factors such as the Time Difference Of Arrival (TDOA) and/or Frequency Difference of Arrival (FDOA) between reception of the signal at each of the receivers. By way of example, all or a part of the processing unit may be located on one of the vehicles, and/or at a remote station such as at a ground-based controller station. Processing at a ground-based station is advantageous due to relatively easy availability of electrical power for powering one or more processors, however it is envisaged that using the techniques described herein it may be possible to perform the processing efficiently enough that some or all of the processing method described herein can be carried out onboard one or more of the vehicles (which would advantageously enable distribution of the associated computing load).

It is desirable that position estimation accuracy, geographical coverage area, and/or operational efficiency are maximised. However, existing systems and methods have hitherto failed to perform completely satisfactorily. The present disclosure aims to alleviate, at least to an extent, problems (such as those aforementioned) associated with existing systems and methods.

A particular problem with existing systems and methods that use multiple ones of TDOA, FDOA and/or other measurements such as Doppler Rate Difference of Arrival (DRDOA) to compare sample streams from different vehicles, is that it can be difficult to determine the corresponding time difference/offset, frequency difference/offset and/or Doppler rate (acceleration) offset that allows one sample stream to be aligned with the other sample stream of a pair that are being compared. A large number of potential combinations of such offsets have to be tested to see if they produce a maximum correlation of the two sample streams, and this entails searching in up to three (or more) dimensions for the optimal combination of offsets. This can consume large amounts of computing power, and/or take a long time, thereby leading to high power consumption, high equipment cost, and/or long delays before a signal source's location can be determined. The techniques described herein address this problem using an iterative search process in which a maximum of two offsets are varied in each iteration, as further described below. The disclosed search process reduces search effort and thereby reduces computing resource requirements, leading to reduced energy consumption, reduced equipment cost, and improved speed of operation.

A further problem exists with known systems and methods, specifically ones that attempt to relate (ii) TDOA, FDOA and DRDOA differential offsets determined to exist between pairs of sample streams, to (ii) respective ranges between a signal source location and multiple receivers of the signal (which receivers sample the signal to produce the sample streams), to allow an estimate of the signal source to be determined using multilateration techniques. The problem is that it is generally necessary to perform a search across a space encompassing a very large number of possible ("candidate") source locations (a candidate source location being a location that is to be tested to see if it could be the true source location), in order to find a candidate location that results in calculated TDOA, FDOA and DRDOA values (calculated based on the ranges between the known receiver positions and the candidate source location) that reasonably well match the actual TDOA, FDOA and DRDOA offsets that are measured between (determined to exist between) the pairs of sample streams. Furthermore, the inventors have realised that such a search does not reliably converge to a single optimal location, and so to mitigate that, the inventors have realised that the system of equations that is used to derive the calculated TDO, FDOA and DRDOA values can be manipulated so as to make convergence more likely, if not practically guarantee it. The techniques described below thus greatly enhance the robustness of the processing carried out to determine the location of a signal source, and thereby (by reducing failed attempts at convergence) reduce processing effort and increase the accuracy of location estimation.

A further problem with existing methods and systems is the difficulty in determining the transmission (or emission) power of the source of an electromagnetic (e.g. radio) signal, without a-priori knowledge of the signal source. The inventors have realised that determination of the transmitter power can be used to classify different types of signal source, and thereby can assist in validating the estimated signal source position that is arrived at by multilateration. For example, a high power transmission would not be expected to be sourced from a highly mobile/agile personal radio transmitter, and so such a high power transmission would not be expected to originate from a cramped location or one requiring high levels of agility. The method described below for determining the power of an electromagnetic signal can be performed without any a-priori knowledge of the signal source, and can also result in an indication of "Dilution of Precision" which is a measure of how degraded the source location estimate is versus the precision of knowledge of the receiver locations, and such a measure can be used (i) as an indication of confidence in the location estimate, and (ii) to steer the guidance of the vehicles that carry the receivers, e.g. by increasing the inter-vehicle vehicle distances to increase location estimation accuracy.

Although the techniques described herein are envisaged as being used in connection with receivers mounted on orbiting spacecraft moving along orbital paths, the disclosed techniques are also applicable to receivers mounted upon aircraft flying along paths that are not strictly-speaking "orbits" but nevertheless are circular/elliptical and geocentric, termed herein "geocentric paths", which are thereby at least partially equivalent to an orbital path (or at least a part of such a path). Similarly, the disclosed techniques can also be applied to receivers mounted on marine craft travelling along at least a part of a geocentric path (e.g. along at least part of a circular path around the perimeter of the Earth). It is also noted that in the case of marine-vehicle-mounted receivers, although their elevation above the Earth's surface is relatively small, it is possible that they may be used to locate a signal source that is higher above them. Thus, the following description should not be interpreted as being limited to said receivers being mounted only on spacecraft. Provided that the receiver positions are known, then such differential receiver techniques can be used to estimate a location of a signal source. For example, data corresponding to (or derived from) the received signal can be sent from each vehicle to a processing unit where data from each vehicle can be collated and compared/processed using multilateration techniques, e.g. based on Time Difference of Arrival (TDOA) and/or Frequency Difference of Arrival (FDOA), to thereby estimate the location of the signal source. The techniques disclosed herein assist with improving the accuracy of such location position estimation.

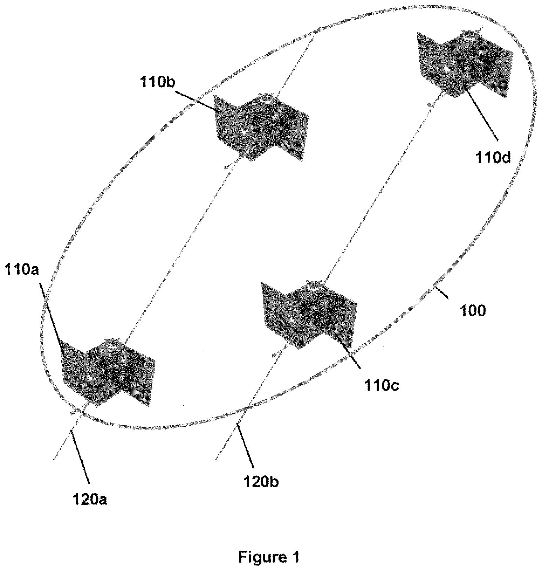

Referring to Figure 1, a receiver formation 100 is shown having first to fourth vehicle positions 110a-110d. Each vehicle has mounted thereon a receiver for receiving a signal transmitted by a signal source that is to be located. By way of example, each of the receivers employs a detector such as an omnidirectional Very-High Frequency (VHF) antenna to capture a signal of interest, the source of which is to be located, although other types of detectors can be used for other types of electromagnetic signals, e.g. optical detectors for optical signals. The vehicles travel in close vicinity, so as to be able to detect a maximum number of common targets (e.g. signal sources of interest) on the Earth's surface, since minimising vehicle separation maximises coverage area, however, conversely, to maximise location accuracy a minimum separation needs to be guaranteed between all the vehicles in the formation (or "cluster").

As shown in Figure 1, a plurality of vehicles are, at a time or times, positioned at first to fourth vehicle positions 110a-110d. In this example the first and second vehicle positions 110a,110b are located on a first geocentric path 120a (e.g. a first orbital path which lies in a first orbital plane), and the third and fourth vehicle positions 110c,110d are located on a second geocentric path 120b (e.g. a second orbital path which lies in a second orbital plane), however other relative arrangements of the vehicles are possible provided that positions of the vehicles are known, and provided that a certain distance is maintained between the vehicles (said distance being determinative of location estimation accuracy and of coverage area). Additionally, the vehicle paths need not be geocentric, and instead the vehicle paths can be centred upon some other point in space, e.g. such as a Lagrange point, or the Moon or body in the solar system. The vehicles move along their corresponding paths, maintaining a relatively fixed arrangement with respect to one another, while each regularly performing an operation to capture a signal that is transmitted by a signal source of interest.

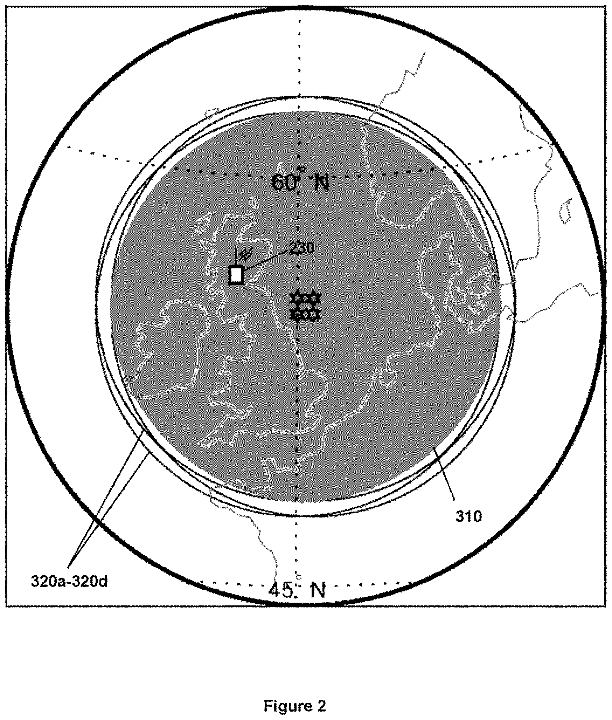

Referring to Figure 2, each of the vehicles with their onboard receivers employ a detector such as an omnidirectional Very-High Frequency (VHF) antenna to capture terrestrial transmissions of interest (for which location is to be estimated), such as signal source 230. A characteristic of an omnidirectional antenna is to receive signals equally from all directions, and this behaviour is modelled as a purely spherical antenna pattern (as shown by separate offset circles 220a-220d corresponding to individual coverage areas for each of the respective receivers, that being the intersection of the respective antenna patterns with a spherical Earth). A common coverage area 210, projected onto the Earth's surface, is the intersection of the individual coverage areas, which results in an approximately circular projected area. The common coverage area 210 can be calculated for a given angle of elevation (measured as the angle from a horizontal plane on the Earth's surface to the line of sight between the point of signal transmission/emission and a respective one of the receivers). The common coverage area 210 (see Figure 2) is ideally maximised to optimize revisit time performance of the vehicle cluster, however maximising common coverage area 210 requires minimisation of the maximum separation distance between vehicles (the maximum separation distance being the largest separation distance between any two of the vehicles), and reducing separation distance decreases position estimation accuracy. A trade-off is therefore reached between coverage area and accuracy. Increasing separation distance between vehicles increases the Time Difference of Arrival (TDOA) and so as a consequence provides higher location estimation precision. However, increasing vehicle separation causes a reduction in common coverage area 210, which may be detrimental to operating costs and/or update frequency (due to lower revisits and reduced time over a target area).

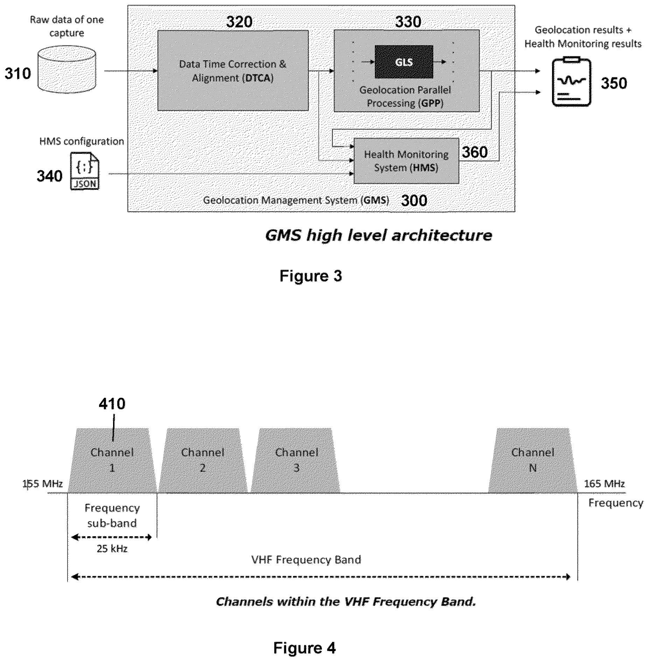

Increased accuracy can also result from the vehicles being located at substantially the same orbital altitude, which tends to result in each receiver being subject to the same (e.g. atmospheric) perturbations and differences in orbital dynamics, which factors therefore cancel out, minimising errors in position estimation which could otherwise result. As shown in Figure 1, first to fourth vehicle positions 110a-110d can be arranged in a formation, with each vehicle position 110a-110d being substantially in a common geocentric shell, e.g. having a substantially same radius from the Earth's centre. During operation, formation maintenance (e.g. under control of a "Geolocation Management System", GMS 300, such as that illustrated in Figure 3 - the name not being limited to only geolocation but also potentially covering locating signal sources in free space) is performed to maintain vehicle altitudes, to ensure the same orbital dynamic and minimum formation drift, and to maintain the vehicles' relative formation, thereby ensuring the most accurate location results. For example, said GMS 300 can be used to instruct one or more of the vehicles to execute said manoeuvres and can be used to receive the captured data 310 from the vehicles, and to subsequently perform processing on the sampled data streams so as to estimate a location of the signal source 230 which transmitted the signal. Other methods of maintaining vehicle alignment can be used.

In one example, each of the vehicles can comprise one or more processors configured for executing a stored computer program comprising machine-readable instructions (e.g. stored on one or more machine-readable media of said vehicle) that when executed by said one or more processors causes the one or more processors to act upon obtained navigation information (e.g. navigation information sent to the respective vehicle by the GMS 300) by causing said vehicle to control (e.g. adjust and/or maintain) its position in accordance with said navigation information. The navigation information can be obtained via a receiver of the vehicle, and can comprise one or more of: computer program instructions; parameters; commands; positional coordinates; and data from which such instructions, parameters, commands and positional coordinates can be derived.

Referring to Figure 3, generally, captured data 310 (i.e. the sampled data streams, otherwise termed "sample streams") are obtained from each of a plurality of vehicles, and then alignment of the sample streams 310 is first performed, according to the techniques disclosed herein. This obtaining/aligning can for example be performed at GMS 300, which may be ground-based, and/or may be fully or partially based at one of the vehicles or at another vehicle. Once alignment of the sample streams 310 has been determined, then multilateration techniques (the details of which are outside of the scope of this disclosure) can be performed (e.g. by location processing module 330 of GMS 300) based on one or more measured differential properties of the received signal (such as for example Time Difference Of Arrival, TDOA, or Frequency Difference Of Arrival, FDOA) to determine an estimate of the location of the signal source of interest.

Figure 3 shows a "Geolocation Management System" (GMS) 300 (which is not limited to only geolocation but can apply also to locating in free space). The GMS 300 obtains (e.g. receives via one or more wireless communication links) respective sample streams 310 (each comprising a plurality of data values representative of successive samples of a property, such as amplitude, phase and/or frequency, of a signal as received at a respective vehicle) from each vehicle, corresponding to the received/captured signal at the respective vehicle position 110a-110d. The GMS 300 (or another "processing unit" that is provided for processing the sampled data streams) can include receiving apparatus for receiving the plurality of datasets from respective ones of a plurality of vehicles. Similarly, each of the vehicles is capable of receiving and sampling the electromagnetic signal to produce a respective dataset, wherein the datasets comprising data samples representing the sampled electromagnetic signal are transmitted by the respective vehicles to the GMS or other processing unit.

The GMS 300 comprises processing means, such as one or more computer processors suitably programmed, for processing the captured data 310 obtained from the vehicles. The vehicles may not be synchronised in time (e.g. if they do not operate from a common processor clock), therefore the sample streams that the vehicles produce are assumed to not be synchronised with respect to one another. Timestamps which are embedded in the sample streams can be used by a data stream alignment module 320 (otherwise termed a "Data Time Correction & Alignment" module), to align the start times of the respective captured data (sample streams) 310 from each vehicle, and to optionally also reshape (i.e. stretch or compress) the sample streams to compensate for differences and/or drift in the sampling clock rate and/or phase at each vehicle. The aligned sample streams (which also contain validated position data for their respective vehicle of origin) are then processed by a location processing module 330 (which can employ parallel processing, such as in the example shown in Figure 3 which uses "Geolocation Parallel Processing" GPP module 330, the name not limiting operation to only geolocation but also covering locating in free space), which estimates a location of a source 230 of the received/captured signal, using differential techniques such as TDOA (Time Difference of Arrival) and/or Frequency Difference of Arrival (FDOA) based on the aligned captured sample streams and their position data, to produce location results 350 comprising the estimated location. In some circumstances the location estimate can be performed on only two sample streams initially, but improved if further sample streams are available. Validating the position data enhances the accuracy of such differential multilateration techniques by excluding inaccurate data. For example, the vehicle position data can be filtered by disregarding (or deleting) vehicle position data that is tagged with timestamp information that is determined to be invalid (e.g. timestamps that are earlier than the timestamp information of the earliest data values in the aligned sample streams, and/or later than the timestamp information of the latest data values in the aligned sample streams). To do this conveniently and efficiently, the aligned sample streams can be tagged with one or more of: validated position data for each vehicle; and/or status indicating for each vehicle whether or not the respective vehicle's sample stream can be used for the step of estimating a location, based on the respective vehicle's sample stream having been successfully (or not) start-time-aligned.

The GMS 300 optionally also comprises a Health Monitoring System 360, which monitors the health of the vehicles, optionally in accordance with health monitoring configuration information 340, and provides health status which is optionally included with the location results 350. The GMS can optionally also comprise means for performing other maintenance-related tasks, such as e.g. monitoring vehicle positions and movement paths, and issuing course adjustment instructions to the vehicles as may be required to maintain the vehicles in a relatively fixed arrangement in their respective vehicle positions 110a-110d. Likewise, each of the vehicles is capable of being controlled to move in a respective path, such as an orbital path around the Earth. Each of the vehicles may be capable of determining its position (e.g. using GNSS) and sending that to the GMS or other processing unit, and/or the GMS/processing unit may be capable of determining vehicle positions by itself.

Techniques that can be carried out by the location processing module 330 in order to estimate a location of the signal source 230 based on the sample streams will now be described.

Time Difference of Arrival & Frequency Difference of Arrival

Multilateration is a technique that can be used to determine the location of a signal source, based on measurements of differences in distance from the source to a number of pairs of receiver "stations" or "spacecraft" / "S/C", wherein each station has a known location. Such "stations" or "spacecraft" / "S/C" can for example be those flying in a Low Earth Orbit (LEO), although in the general case, any vehicle capable of receiving a signal of interest can be considered to be a "station" or "S/C" as referred to in the following description. By measuring the difference in distance of multiple pairs of stations, the exact location of a device can be calculated using conventional geometric equations. The respective differences in distance can be calculated by measuring differences in the time or phase of arrival of a common signal of interest (e.g. an electromagnetic signal emitted by a signal source which it is desired to locate) at multiple pairs of stations. In order for these measurements to be consistent, all the stations involved should be synchronous. Many ways of synchronizing the stations have been developed in the art. Very often, a common clock is distributed by connecting a wire or a fibre, or by using a separate wireless link. For example, each station (or vehicle) can obtain synchronisation information from a GNSS (Global Navigation Satellite System) signal.

Signals coming from a common transmitter can be captured by vehicles, e.g. spacecraft in Low Earth Orbit (LEO), at different times and frequencies due to propagation effects and hardware biases. The propagation effects can be modelled introducing time delays, frequency shifts, and doppler rate shifts, to mitigate such effects and biases. Due to an absence of information regarding the absolute time and frequency of transmission of the signal by the transmitter, differential measurements such as the TDOA (Time Difference of Arrival), FDOA (Frequency Difference of Arrival), and DRDOA (Doppler Rate Difference of Arrival) are performed to geolocate the transmitter instead of absolute measurements. The differential measurements can be performed using a Cross Ambiguity Function that will be described further herein.

*Received Sample Stream Model*

Each station (e.g. vehicle) receives the signal of interest (e.g. using a detector such as an antenna, and a receiver), and converts the received signal to a sample stream comprising successive data samples that are representative of the signal as received at that station. The received Sample Stream $r_i$ **(equation I)** of the $i^{th}$ S/C at the $n^{th}$ epoch is composed of a signal component $x_i$ and a noise component $w_i$. The Sample Stream is composed of $N$ samples. The sampling rate of the received Sample Stream is $f_s$.

The signal component $x_i$ (equation II) is composed of a signal of interest $x$ that is common to all the S/C but can be considered to be time shifted by $d_i$, frequency shifted by $v_i$, and attenuated by the root square of the signal component's power $P_i$ compared with the signal as it was emitted at the source. The signal component $x_i$ is also affected by the Doppler rate $\dot{v}_i$ and the Doppler acceleration $\ddot{v}_i$. The signal of interest (which is common to all S/C) is composed of N samples and has a unit power (equation III).

The noise component $w_i$ is an Additive White Gaussian Noise (AWGN) with a variance $\sigma_i^2$.

$$r_i(n) = x_i(n) + w_i(n) \qquad (I)$$

$$x_i(n) = \sqrt{P_i}\, x(n + d_i)\, e^{j2\pi\left(\frac{n}{f_s}v_i + \frac{n^2}{2f_s^2}\dot{v}_i + \frac{n^3}{6f_s^3}\ddot{v}_i\right)} \qquad (II)$$

$$\frac{1}{N}\sum_{n=0}^{N-1}|x(n)|^2 = 1 \qquad (III)$$

*Cross Ambiguity Function*

The Cross Ambiguity Function (CAF) is used to determine a correlation peak between the sample stream of the $i^{th}$ S/C and that of the $j^{th}$ S/C, $r_i$ and $r_j$ after applying a time shift $k$, a frequency shift $v$, and a Doppler rate shift $\dot{v}$ between them **(equation IV)**. The Doppler acceleration is assumed to be zero in this particular example. Further detail regarding the CAF is given below under the "Transmitter Power Determination" section.

The maximum value of the CAF **(equation V)** is achieved at $k= \Delta d_{ij}$, $v=\Delta v_{ij}$, and $\dot{v}= \Delta \dot{v}_{ij}$ **(equation VI)**. The time parameter $\Delta d_{ij}$ corresponds to the TDOA (Time Difference of Arrival) for the two spacecraft being assessed. The frequency parameter $\Delta v_{ij}$ corresponds to the FDOA (Frequency Difference of Arrival). A search algorithm is performed to find the CAF peak, which corresponds to the greatest correlation between the sample streams under consideration.

$$CAF_{ij}(k, v, \dot{v}) = \sum_{m=0}^{N-1} r_i(m)\, r_j^*(m+k)e^{-j2\pi\left(\frac{m}{f_s}v + \frac{m^2}{2f_s^2}\dot{v}\right)} \qquad (IV)$$

$$\left|CAF_{ij}\left(\Delta d_{ij}, \Delta v_{ij}, \Delta \dot{v}_{ij}\right)\right| \approx \sqrt{P_i}\sqrt{P_j} \qquad (V)$$

$$\begin{cases} \Delta d_{ij} = d_i - d_j \\ \Delta v_{ij} = v_i - v_j \\ \Delta \dot{v}_{ij} = \dot{v}_i - \dot{v}_j \end{cases} \qquad (VI)$$

*CAF search algorithm*

The estimation of TDOA and FDOA is achieved by dividing the estimation process into four steps, as described herein. Using a four-step estimation process reduces computational complexity and effort because it permits completion of a search for the TDOA and FDOA values that produce the peak of the CAF without a requirement for a full three-dimensional search of the CAF correlation peak within the solution space as would be the case for a brute force solution.

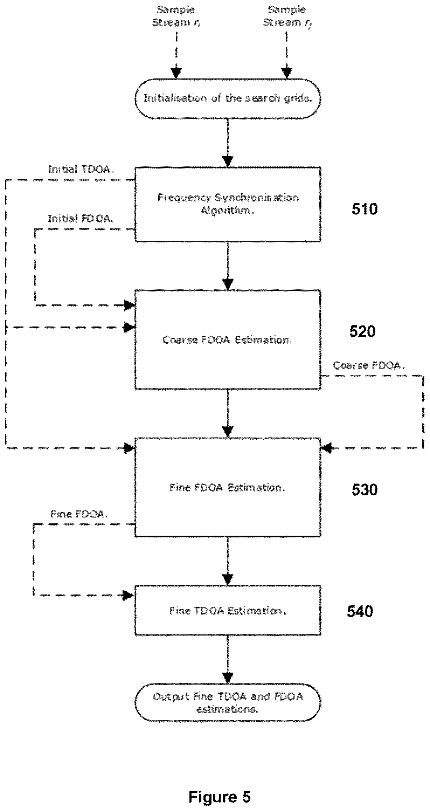

The four steps of the disclosed CAF search algorithm are illustrated in Figure 5, and are described as follows:

i Step 1: Frequency Synchronisation Algorithm (FSA), which provides initial estimates of TDOA and FDOA.
ii Step 2: Coarse FDOA estimation.
iii Step 3: Fine FDOA estimation.
iv Step 4: Fine TDOA estimation.

*Step 1: Frequency Synchronisation Algorithm (FSA)*

An estimation of the frequency shift between the Sample Streams $r_i$ and $r_j$ is made (after ignoring the effect of the Doppler rate) to evaluate the CAF in two dimensions (equation VII). The CAF in two dimensions can be expressed using the Fast Fourier Transform (FFT) to produce a CAF-FFT version (equation VIII). The FSA is performed (step 510 in Figure 5) based on the CAF-FFT using a coarse and a fine estimation of the frequency shift. The FSA thus provides an initial estimation of the FDOA $\Delta v'_{ij}$ and an initial estimation of the TDOA $\Delta d'_{ij}$. Those initial estimates are then used in subsequent steps.

$$CAF_{ij}(k, v, 0) = \sum_{m=0}^{N-1} r_i(m) r_j^*(m+k) e^{-j2\pi \frac{m}{f_s} v} \qquad (VII)$$

$$CAF_{ij}(k, v, 0) = FFT^{-1}\left( FFT\left( r_i(m) e^{-j2\pi \frac{mv}{N}} \right) FFT^*\left( r_j(m) \right) \right)(k) \qquad (VIII)$$

*Step 2: Coarse FDOA Estimation*

An estimation of coarse value of the FDOA is then made using the initial TDOA and FDOA estimations from Step 1, wherein the sample stream CAF peak is searched again but this time in the second and the third dimension of the CAF after setting the difference of arrival value to $\Delta d'_{ij}$ (equation IX). A search grid is used for the coarse FDOA estimation (step 520 in Figure 5). Each search grid is defined by its coarse FDOA range and coarse FDOA search step size. Step 2 thus provides a (first, coarse) correction term for the initial FDOA estimation $\Delta v''_{ij}$ at the maximum value (denoting peak correlation) of the CAF. The coarse FDOA value $\Delta v_{ij}^c$ is thus the sum of two FDOA estimations (the initial FDOA estimation from Step 1, and the coarse correction from step 2) $\Delta v'_{ij}$ and $\Delta v''_{ij}$ (equation X).

$$CAF_{ij}\left(\Delta d'_{ij}, v + \Delta v'_{ij}, \dot{v}\right) = \sum_{m=0}^{N-1} r_i(m) r_j^*\left(m + \Delta d'_{ij}\right) e^{-j2\pi\left(\frac{m}{f_s}(\Delta v'_{ij} + v) + \frac{m^2}{2f_s^2}\dot{v}\right)} \qquad (IX)$$

$$\Delta v_{ij}^c = \Delta v'_{ij} + \Delta v''_{ij} \qquad (X)$$

*Step 3: Fine FDOA Estimation*

Step 3 estimates fine values of the FDOA, using the initial TDOA estimation provided by step 1 and the coarse FDOA estimation provided by step 2 **(equation XI).** The CAF is searched again (see step 530 in Figure 5), similarly to in step 2: using a search grid defined by a fine FDOA range, and a fine FDOA step size. Step 3 thus provides a fine correction term $\Delta v'''_{ij}$ for the FDOA coarse estimate from step 2. The sum of the coarse FDOA estimate from step 2 and the fine correction term yields a fine FDOA estimate ($\Delta \hat{v}_{ij}$) **(equation XII).**

$$CAF_{ij}\left(\Delta d'_{ij}, v + \Delta v^c_{ij}, \dot{v} + \Delta \dot{v}^c_{ij}\right) = \sum_{m=0}^{N-1} r_i(m) r_j^*\left(m + \Delta d'_{ij}\right) e^{-j2\pi\left(\frac{m}{f_s}\left(v + \Delta v^c_{ij}\right) + \frac{m^2}{2f_s^2}\left(\dot{v} + \Delta \dot{v}^c_{ij}\right)\right)} \qquad \text{(XI)}$$

$$\begin{cases} \Delta \hat{\dot{v}}_{ij} = \Delta \dot{v}^c_{ij} + \Delta \dot{v}'_{ij} \\ \Delta \hat{v}_{ij} = \Delta v^c_{ij} + \Delta v'''_{ij} \end{cases} \qquad \text{(XII)}$$

*Step 4: Fine TDOA Estimation*

Step 4 provides a fine TDOA estimate by applying the fine FDOA estimate to a further CAF search **(equation XIII).** Step 4 (see step 540 in Figure 5) is a one-dimensional search of the time delay between the Sample Streams $r_i$ and $r_j$, wherein the TDOA estimate $\Delta \hat{d}_{ij}$ is obtained at the maximum of the CAF **(equation XIV).**

$$CAF_{ij}\left(k, \Delta \hat{v}_{ij}, \Delta \hat{\dot{v}}_{ij}\right) = \sum_{m=0}^{N-1} r_i(m) r_j^*(m + k) e^{-j2\pi\left(\frac{m}{f_s}\Delta \hat{v}_{ij} + \frac{m^2}{2f_s^2}\Delta \hat{\dot{v}}_{ij}\right)} \qquad \text{(XIII)}$$

$$\Delta \hat{d}_{ij} = \underset{k}{argmax}\left(\left|CAF_{ij}\left(k, \Delta \hat{v}_{ij}, \Delta \hat{\dot{v}}_{ij}\right)\right|\right) \qquad \text{(XIV)}$$

Thus, fine estimates of both TDOA and FDOA can be obtained using the above-described method, while requiring at most a two-dimensional search of the CAF in any one iteration. This significantly reduces the search effort compared with a full three-dimensional search of the CAF, and thereby reduces processing requirements.

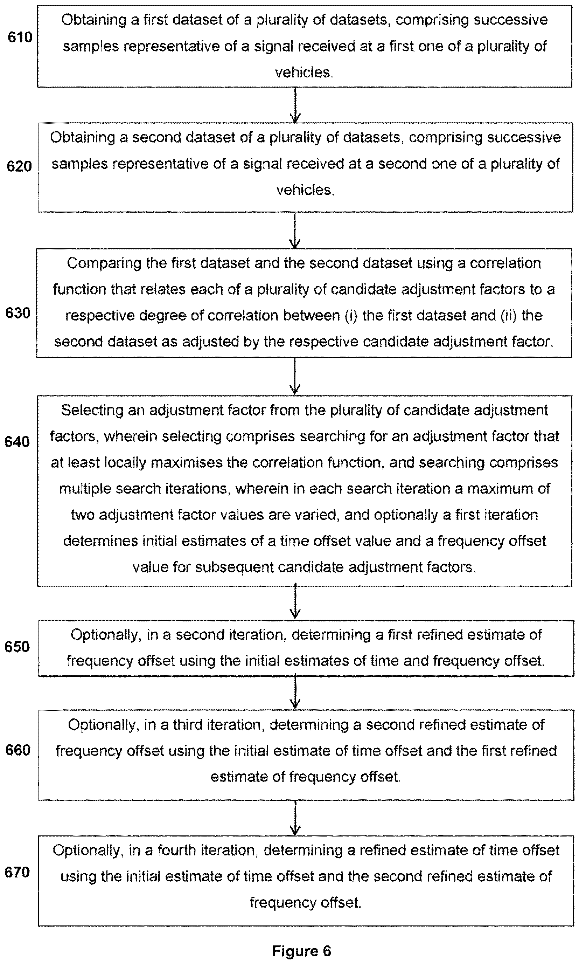

Referring to Figure 6, the above disclosure (with reference to equations I to XIV) will now be described more generally, in terms of a method of processing data for estimating a location of a source of an electromagnetic signal, wherein the data comprises a plurality of datasets, each dataset being representative of the signal as received at a respective one of a plurality of vehicles (otherwise termed "stations" or "receivers", with a spacecraft or "S/C" being a particular example, although other vehicles such as marine vehicles or airborne vehicles can also carry receivers capable of receiving said signal).

The method comprises a step 610 of obtaining a first dataset of the plurality of datasets, wherein the first dataset comprises successive data samples that are representative of the signal as received at a first one of the plurality of vehicles. For example, each vehicle typically includes a detector (such as an antenna in the case of radio signals, or an optical sensor in the case of light-based signals) feeding a receiver that is arranged to discriminate the signal from background electromagnetic radiation. Each vehicle then uses an analogue to digital converter fed by a sampling clock of a known frequency to sample the received signal and turn it into a succession of data samples, otherwise termed a sample stream. Each vehicle also typically contains a GNSS receiver so as to be able to timestamp at least some of the data samples with an absolute time, which can be used later on by a processing unit (such as GMS 300) to determine synchronisation information for each pair of sample streams from multiple vehicles. Additionally, each sample stream is typically accompanied by or comprises position data indicating to the processing unit the precise location of the vehicle at particular times (which the respective vehicle can derive from the GNSS data), such that the processing unit can relate data samples to vehicle positions. Alternatively the vehicle position information can be generated by the processing unit, e.g. by tracking positions of the vehicles.

Similarly to step 610, at step 620 the method comprises a step of obtaining a second dataset of the plurality of datasets, wherein the second dataset comprises successive data samples representative of the signal (from the same transmitter/emitter) as received at a second one of the plurality of vehicles.

At step 630, the first dataset and the second dataset are compared using a correlation function (such as the CAF - see equation IV). The correlation function (see equation IV) relates an adjustment factor (which includes values for alignment of the first and second datasets in terms of at least three differential measurements such as TDOA, FDOA and DRDOA, for example the adjustment factor can be a vector or matrix comprising those differential measurements). Referring to equation IV, the values are a time shift $k$, a frequency shift $v$, and a Doppler rate shift $\dot{v}$ between the data values (samples) of the first sample stream and of the second sample stream. Time, frequency and Doppler rate (acceleration) can be considered to each be of a successively higher order than the preceding one in that list. Optionally the values can further include a Doppler acceleration Difference of Arrival (DADOA) value, which is an order higher than DRDOA, and at least initially assumed to be zero. The comparing includes comparisons made using a plurality of adjustment factors. The comparing is optionally performed using a predetermined range of samples of the first dataset and/or the adjusted second dataset (a larger range requires more computing power but may give more accurate results).

At step 640, a particular adjustment factor is selected, which particular adjustment factor is one that maximises the value of the correlation function (i.e. minimises differences between the first dataset and the second dataset after adjustment). The correlation function can be expected to reach a maximum when the first dataset and the second dataset are aligned, since both datasets relate to reception of the same signal, albeit at separate vehicles having different distances from the signal source, and thus by aligning the datasets in terms of at least Time Difference of Arrival (time offset), preferably also Frequency Difference of Arrival (frequency offset), and optionally also Doppler Rate Difference of Arrival (acceleration offset), the signals represented in the two datasets should substantially match and thus produce a strong peak of the correlation function.

The selection of the particular adjustment factor involves searching for an adjustment factor out of the plurality of adjustment factors that maximises the correlation function, and the search comprises multiple iterations. Each iteration tests the results of inputting a number of the plurality of adjustment factors into the correlation function, and chooses a most favourable adjustment factor from those results. In any particular iteration, instead of choosing ones of the plurality of adjustment factors in which all three alignment values vary/differ, adjustment factors are chosen in which only a maximum of two of the alignment values are varied in any particular iteration. Limiting each search iteration to varying only two alignment values reduces the size of the search in a particular iteration.

In order to permit the search to find a global maximum of the correlation function, without requiring a full three-dimensional search (i.e. a search in which all values are varied in a single iteration), the first iteration can vary the two lowest order values (e.g. time and frequency shifts) while assuming the acceleration shift to be zero, and optionally a subsequent iteration can vary two values that are one order higher and overlapping with the values varied in the first iteration (e.g. frequency and acceleration shifts) while using the initial estimate of time shift found by the first iteration. Values that are not varied in a subsequent iteration can carry forward their most optimal value (e.g. their value that that produced the highest value of the correlation function) from the preceding iteration. After the two highest order values have been searched for, the next iteration can optionally return to varying the two lowest order values to find a more optimal value for those, and so on until the optimal values found in successive iterations are found to converge (cease to change). Alternatively or additionally, subsequent iterations can concentrate on the same two values as in the preceding iteration, with a reduced search range and finer granularity to obtain refined values.

By way of specific example, a first search iteration can vary time shift (otherwise termed time offset) and frequency shift (otherwise termed frequency offset) values, within predetermined first time and first frequency ranges, while acceleration shift (otherwise termed acceleration offset or Doppler rate offset) is initialised to zero. In this first iteration, the time offset value is varied with a first time granularity that is relatively coarse, and the frequency offset value is varied with a first frequency granularity that is relatively coarse, so as to obtain initial estimates of the time offset and frequency offset values.

Optionally in a second search iteration, as in step 650 of Figure 6, the initial estimate of time offset is used, and the frequency offset is varied within a second predetermined frequency range (preferably narrower than the first predetermined frequency range, since the search should be converging) about the initial estimate of frequency offset with a second frequency granularity (finer than the first frequency granularity) to find a first refined estimate of frequency offset. Optionally, the acceleration (Doppler rate) offset is also varied within a first predetermined acceleration range and with a first acceleration granularity, to find an initial estimate of acceleration offset.

Optionally, a third search iteration 660 can be performed in which the initial estimate of time offset is used, wherein frequency offset values are varied within a third predetermined frequency range (narrower than the second predetermined frequency range) about the first refined estimate of frequency offset, with a third frequency granularity that is finer than the second frequency granularity, to determine a second refined estimate of frequency offset that is more refined (e.g. accurate) than the first refined estimate of frequency offset. Optionally, the acceleration offset can be varied within a second acceleration range (smaller than the first acceleration range) about the initial estimate of acceleration offset, with a second acceleration granularity that is finer than the first acceleration granularity, to determine a refined estimate of acceleration offset that is more refined than the initial estimate of acceleration offset. It will be appreciated that one or other (or both) of the second and third iterations can be omitted.

Optionally, having determined estimates of the time offset and frequency offset, a fourth iteration 670 can be performed in which the current best estimate of frequency offset that was found (from whichever of the first to third iterations were performed) is used (optionally along with the current best estimate of acceleration offset, e.g. the refined estimate of acceleration offset from the third iteration), and the time offset is varied within a second predetermined time range about the initial estimate of time offset to find a refined estimate of time offset that is more refined than the initial estimate of time offset.

The result of the method described above with reference to Figure 6 is a set of estimates for time offset, frequency offset, and optionally acceleration offset, by which the second dataset can be adjusted such that the correlation function output is maximised. With such a set of estimates, alignment of the second dataset to the first dataset is optimised, such that the estimates of time offset, frequency offset (and optionally acceleration offset) for the particular pair of datasets can be used in a subsequent analysis using multilateration to determine the location of the signal source. Optionally, the second dataset is aligned with the first dataset using the selected adjustment factor which comprises the values of time offset, frequency offset, and optionally acceleration offset and/or Doppler acceleration offset. A similar analysis is then optionally repeated for one or more further pairs of datasets from corresponding different pairs of vehicles. By analysing a sufficient number of pairs of datasets in this way, multilateration techniques can yield a location estimate for the signal source based on the alignment of the datasets (e.g. based on the respective adjustment factors and/or based on the adjusted datasets) for each pair of datasets. For example, four vehicles can yield six dataset (sample stream) pairs, three vehicles can yield three dataset (sample stream) pairs, and two vehicles can yield one dataset (sample stream) pair. By using not only TDOA and FDOA differential measurements, but also DRDOA differential measurements, it is possible to estimate a location of a signal source with higher accuracy, and/or with the use of only two vehicles (rather than the usual 3 or 4 vehicles), noting that using additional vehicles/sample streams enhances accuracy.

Optionally, prior to analysis, the received signal can be filtered according to a known channel bandwidth of a type of signal source of interest, for example a maritime frequency band of 25kHz as shown in Figure 4. By filtering out channel frequencies that are not of interest, location estimation is made more accurate by virtue of excluding signals that may be "red herrings" and cause false correlation peaks. The filtering can be performed at the receiver, e.g. by analogue processing or by digital (and/or software) processing, and/or the filtering can be at least partially performed at the processing unit (e.g. GMS 300) in the digital domain.

Optionally a controller such as GMS 300 can control movement of the vehicles, such that the vehicles are caused to move along corresponding ones of a plurality of geocentric paths having substantially the same size, while maintaining a predetermined formation. In this way, coverage area and position estimation accuracy is controlled and maintained. It will be appreciated that the vehicles may preferably be spacecraft (especially for geolocating a signal source, since the elevated position of satellites above a geolocated source provides for enhanced coverage area), however other vehicles such as aircraft or land or marine based vehicles can be used to carry the receiver apparatus that receives the signal from the source of interest that is to be located. Accordingly it is not necessary for the source to be geolocated, and instead the source can for example be in free space, e.g. in the sky above a fleet of marine or land-based vehicles. However, in the special case of geolocation, the search task can be simplified by discarding candidate locations that do not lie on the Earth's surface.

<u>Acceleration Based Difference of Arrival</u>

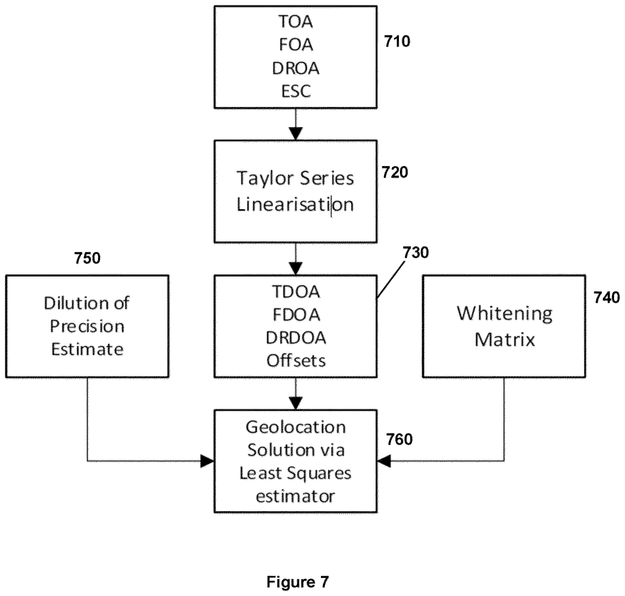

If stations are able to sample received signals and generate sampled data with a high enough timestamping accuracy and a high enough Doppler frequency measurement precision, this can be exploited by making combined use of: Time Difference of Arrival (TDOA) and Frequency Difference Of Arrival (FDOA) techniques (as described above); with additional Doppler Rate Difference Of Arrival (DRDOA) techniques. The joint use of TDOA, FDOA, and DRDOA techniques allows enhanced location estimation precision, and can reduce the minimum necessary number of receivers/vehicles (e.g. S/C) that are needed to perform location estimation, e.g. from three or four, down to only two. The particular algorithm described herein, which uses a system of equations to process Time of Arrival (TOA), Frequency of Arrival (FOA) and Doppler Rate of Arrival (DROA) measurements, has been developed by the inventors. (see Figure 7).

<u>*Time, Frequency, and Doppler Rate of Arrival*</u>

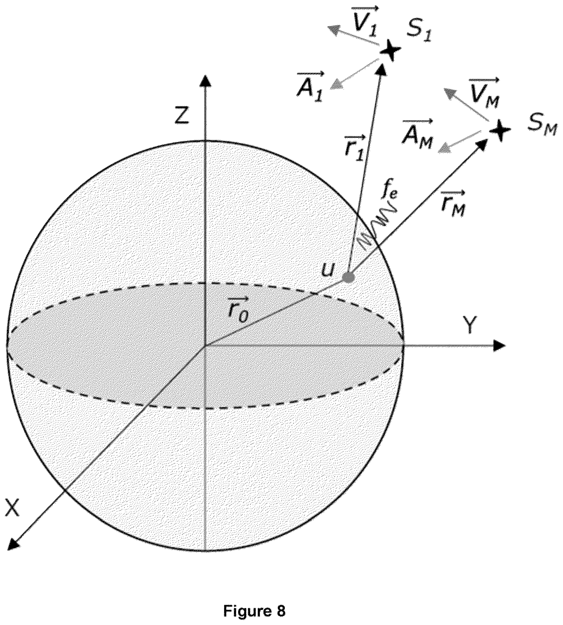

The ECEF (Earth Centred, Earth Fixed) coordinates of a Radio Frequency (RF) transmitter located at the Earth's surface is $u = [x, y, z]^T$. The transmitted signal at the frequency $f_e$ is received at $M$ S/C with known positions $S_i = [x_i, y_i, z_i]^T$, velocities $V_i = [v_{x_i}, v_{y_i}, v_{z_i}]^T$, and accelerations $A_i = [a_{x_i}, a_{y_i}, a_{z_i}]^T$, $i \in \{1, ..., M\}$ (see Figure 8). This is the case for a geolocated signal source, but it will be appreciated that a signal source can be located anywhere in space, while in the specific case of a signal source being geolocated it is possible to assume that the source is located on the Earth's surface and therefore the search for a candidate location that satisfies all of the received data characteristics can be constrained to a subset of possible locations, simplifying the search operation and accordingly reducing required processing effort/power, and increasing search speed.

A set of equations defining Time of Arrival (TOA), Frequency of Arrival (FOA), Doppler Rate of Arrival (DROA) and optionally an Earth Surface Constraint (ESC) are first derived as shown at 710 in Figure 7:

The Time Of Arrival (TOA) $\tau_i$ **(equation XV)** can be expressed as a function of the Euclidean distance $r_i$ **(equation XVI)** between the transmitter and the S/C $S_i$, and the speed of light $c$.

$$\tau_i = \frac{r_i}{c} \qquad (XV)$$

$$r_i = \|s_i - u\| = \sqrt{(x - x_i)^2 + (y - y_i)^2 + (z - z_i)^2} \qquad (XVI)$$

The Doppler effect equation can be used to compute the Frequency Of Arrival (FOA) $f_i$ **(equation XVII)** and its time derivative, the Doppler Rate Of Arrival (DROA) $\dot{f}_i$ **(equation XIX).** The FOA and DROA depend on the frequency of the transmitter $f_e$ and the range rate $V_{r,i}$ **(equation XVIII)** which depends on the velocity of the S/C $V_i = [v_{x_i}, v_{y_i}, v_{z_i}]^T$. The DROA also depends on additional parameters, which are; the S/C acceleration $A_i = [a_{x_i}, a_{y_i}, a_{z_i}]^T$, and the norm of the S/C velocity **(equation XX).**

$$f_i = f_e \left(1 - \frac{\vec{r_i}\,\vec{V_i}}{c\,r_i}\right) = f_e \left(1 - \frac{V_{r,i}}{c}\right) \qquad (XVII)$$

$$V_{r,i} = v_{x_i}\frac{x - x_i}{r_i} + v_{y_i}\frac{y - y_i}{r_i} + v_{z_i}\frac{z - z_i}{r_i} \qquad (XVIII)$$

$$\dot{f}_i = -\frac{f_e}{c}\left(a_{x_i}\frac{x - x_i}{r_i} + a_{y_i}\frac{y - y_i}{r_i} + a_{z_i}\frac{z - z_i}{r_i} + \frac{\|V_i\|^2}{r_i} - \frac{V_{r,i}^2}{r_i}\right) \qquad (XIX)$$

$$\|V_i\|^2 = v_{x_i}^2 + v_{y_i}^2 + v_{z_i}^2 \qquad (XX)$$

In cases where the transmitter is known to be located on the Earth's surface, the following further assumption can be made. As shown in Figure 8, the Earth's shape can be modelled as a spheroid using the World Geodesic System v84 (WGS84) with major axis $a$ = 6378137m and minor axis $b$ = 6356752.314245m. Geolocated transmitter coordinates can thus be related to the parameters $a$ and $b$ by the Earth Surface Constraint (ESC) function $g$ **(equation XXI).**

$$g = \frac{x^2}{a^2} + \frac{y^2}{a^2} + \frac{z^2}{b^2} - 1 \qquad (XXI)$$

_Problem Formulation Using Taylor Series Linearisation_

The time, frequency, and Doppler (frequency) rate of arrival equations (i.e., **(equation XV), (equation XVII),** and **(equation XIX)),** and the ESC equation (i.e., **(equation XXI)),** have nonlinearities. As illustrated at element 720 of Figure 7, the Taylor Series (TS) linearisation method can be used to convert the nonlinear system of equations to a linear system of equations. The TS linearisation consists in approximating the time, frequency, and frequency rate of arrival (and optionally the ESC in the case of a geolocated signal source), around a linearisation point $\hat{u} = [\hat{x}, \hat{y}, \hat{z}]^T$ that is assumed to be close to the true position $u = [x, y, z]^T$ **(equation XXII).** The distance between the true position and linearisation point is the norm of the displacement vector $\Delta X$ **(equation XXIII).**

$$\begin{cases} x = \hat{x} + \Delta x \\ y = \hat{y} + \Delta y \\ z = \hat{z} + \Delta z \end{cases} \qquad (XXII)$$

$$\Delta X = \begin{bmatrix} \Delta x \\ \Delta y \\ \Delta z \end{bmatrix} \qquad (\mathrm{XXIII})$$

The first-order TS expansion of the TOA yields an expression of the time offset $\Delta\tau_i$ **(equation XXIV)** between the true TOA $\tau_i$ and the TOA value at the linearisation point $\hat{u}$ that is a function of the displacement vector coordinates and the difference between the transmitter and the receiver coordinates **(equation XXV).**

$$\Delta\tau_i = \tau_i - \hat{\tau_i} = \left.\frac{\partial \tau_i}{\partial x}\right|_{(\hat{x},\hat{y},\hat{z})} \Delta x + \left.\frac{\partial \tau_i}{\partial y}\right|_{(\hat{x},\hat{y},\hat{z})} \Delta y + \left.\frac{\partial \tau_i}{\partial z}\right|_{(\hat{x},\hat{y},\hat{z})} \Delta z$$
$$= \frac{A_i^{\hat{x}}}{c} \Delta x + \frac{A_i^{\hat{y}}}{c} \Delta y + \frac{A_i^{\hat{z}}}{c} \Delta z \qquad (\mathrm{XXIV})$$

$$\begin{cases} A_i^{\hat{x}} = \dfrac{\hat{x} - x_i}{\hat{r}_i} \\[2mm] A_i^{\hat{y}} = \dfrac{\hat{y} - y_i}{\hat{r}_i} \\[2mm] A_i^{\hat{z}} = \dfrac{\hat{z} - z_i}{\hat{r}_i} \end{cases} \qquad (\mathrm{XXV})$$

The first-order TS expansion of the FOA yields an expression of the frequency offset $\Delta f_i$ **(equation XXVI)** between the true FOA $f_i$ and the FOA value at the linearisation point $\hat{u}$ that is a function of the wavelength **(equation XXVIII),** the displacement vector coordinates, the difference between the transmitter and the receiver coordinates, and the S/C velocity **(equation XXVII).**

$$\Delta f_i = f_i - \hat{f_i} = \left.\frac{\partial f_i}{\partial x}\right|_{(\hat{x},\hat{y},\hat{z})} \Delta x + \left.\frac{\partial f_i}{\partial y}\right|_{(\hat{x},\hat{y},\hat{z})} \Delta y + \left.\frac{\partial f_i}{\partial z}\right|_{(\hat{x},\hat{y},\hat{z})} \Delta z$$
$$= B_i^{\hat{x}}\Delta x + B_i^{\hat{y}}\Delta y + B_i^{\hat{z}}\Delta z \qquad (\mathrm{XXVI})$$

$$\begin{cases} B_i^{\hat{x}} = \dfrac{1}{\lambda}\left( \dfrac{v_{x_i}}{\hat{r}_i}\left(A_i^{\hat{y}2} + A_i^{\hat{z}2}\right) - \dfrac{A_i^{\hat{x}}}{\hat{r}_i}\left(v_{y_i}A_i^{\hat{y}} + v_{z_i}A_i^{\hat{z}}\right)\right) \\[4mm] B_i^{\hat{y}} = \dfrac{1}{\lambda}\left( \dfrac{v_{y_i}}{\hat{r}_i}\left(A_i^{\hat{x}2} + A_i^{\hat{z}2}\right) - \dfrac{A_i^{\hat{y}}}{\hat{r}_i}\left(v_{x_i}A_i^{\hat{x}} + v_{z_i}A_i^{\hat{z}}\right)\right) \\[4mm] B_i^{\hat{z}} = \dfrac{1}{\lambda}\left( \dfrac{v_{z_i}}{\hat{r}_i}\left(A_i^{\hat{y}2} + A_i^{\hat{x}2}\right) - \dfrac{A_i^{\hat{z}}}{\hat{r}_i}\left(v_{y_i}A_i^{\hat{y}} + v_{x_i}A_i^{\hat{x}}\right)\right) \end{cases} \qquad (\mathrm{XXVII})$$

$$\lambda = \frac{c}{f_e} \qquad (\mathrm{XXVIII})$$

The first-order TS expansion of the DROA yields an expression of the Doppler rate offset $\Delta\dot{f_i}$ **(equation XXIX)** between the true DROA $\dot{f_i}$ and the DROA value at the linearisation point $\hat{u}$ that is a function of $D_i^{\hat{x}}$, $D_i^{\hat{y}}$, and $D_i^{\hat{z}}$ **(equation XXX).**

$$\Delta\dot{f_i} = \dot{f_i} - \hat{\dot{f_i}} = \left.\frac{\partial \dot{f_i}}{\partial x}\right|_{(\hat{x},\hat{y},\hat{z})} \Delta x + \left.\frac{\partial \dot{f_i}}{\partial y}\right|_{(\hat{x},\hat{y},\hat{z})} \Delta y + \left.\frac{\partial \dot{f_i}}{\partial z}\right|_{(\hat{x},\hat{y},\hat{z})} \Delta z$$
$$= D_i^{\hat{x}}\Delta x + D_i^{\hat{y}}\Delta y + D_i^{\hat{z}}\Delta z \qquad (\mathrm{XXIX})$$

$$\begin{cases} D_i^{\hat{x}} = \dfrac{1}{\lambda}\left( \dfrac{a_{x_i}}{\hat{r}_i}\left( A_i^{\hat{y}^2} + A_i^{\hat{z}^2} \right) - \dfrac{A_i^{\hat{x}}}{\hat{r}_i}\left( a_{y_i}A_i^{\hat{y}} + a_{z_i}A_i^{\hat{z}} \right) + \dfrac{A_i^{\hat{x}}}{\hat{r}_i^2}\left( \|V_i\|^2 - V_{r,i}^2 \right) \right) - \dfrac{2V_{r,i}}{\hat{r}_i}B_i^{\hat{x}} \\[10pt] D_i^{\hat{y}} = \dfrac{1}{\lambda}\left( \dfrac{a_{y_i}}{\hat{r}_i}\left( A_i^{\hat{x}^2} + A_i^{\hat{z}^2} \right) - \dfrac{A_i^{\hat{y}}}{\hat{r}_i}\left( a_{x_i}A_i^{\hat{x}} + a_{z_i}A_i^{\hat{z}} \right) + \dfrac{A_i^{\hat{y}}}{\hat{r}_i^2}\left( \|V_i\|^2 - V_{r,i}^2 \right) \right) - \dfrac{2V_{r,i}}{\hat{r}_i}B_i^{\hat{y}} \\[10pt] D_i^{\hat{z}} = \dfrac{1}{\lambda}\left( \dfrac{a_{z_i}}{\hat{r}_i}\left( A_i^{\hat{y}^2} + A_i^{\hat{x}^2} \right) - \dfrac{A_i^{\hat{z}}}{\hat{r}_i}\left( a_{y_i}A_i^{\hat{y}} + a_{x_i}A_i^{\hat{x}} \right) + \dfrac{A_i^{\hat{z}}}{\hat{r}_i^2}\left( \|V_i\|^2 - V_{r,i}^2 \right) \right) - \dfrac{2V_{r,i}}{\hat{r}_i}B_i^{\hat{z}} \end{cases} \qquad \text{(XXX)}$$

The first-order TS expansion of the ESC yields an expression of the offset $\Delta g$ **(equation XXXI)** between the true value of the ellipsoid equation $g$ and the value of the ellipsoid equation at the linearisation point $\hat{u}$. The expression of $\Delta g$ is a function of the linearisation point coordinates and the ellipsoid radii **(equation XXXII)**.

$$\Delta g = g - \hat{g} = \left.\frac{\partial g}{\partial x}\right|_{(\hat{x},\hat{y},\hat{z})}\Delta x + \left.\frac{\partial g}{\partial y}\right|_{(\hat{x},\hat{y},\hat{z})}\Delta y + \left.\frac{\partial g}{\partial z}\right|_{(\hat{x},\hat{y},\hat{z})}\Delta z$$
$$= A_g^{\hat{x}}\,\Delta x + A_g^{\hat{y}}\,\Delta y + A_g^{\hat{z}}\,\Delta z \qquad \text{(XXXI)}$$

$$\begin{cases} A_g^{\hat{x}} = \dfrac{2\hat{x}}{a^2} \\[8pt] A_g^{\hat{y}} = \dfrac{2\hat{y}}{a^2} \\[8pt] A_g^{\hat{z}} = \dfrac{2\hat{z}}{b^2} \end{cases} \qquad \text{(XXXII)}$$

All the vector offsets related to TOA, FOA, DROA, and the ESC can be combined into one vector $\Delta Y$ **(equation XXXIII)** and expressed as a linear system **(equation XXXIV)** that is a function of the design matrix $H$ **(equation XXXV)** and the displacement vector $\Delta X$ **(equation XXIII)**.

$$\Delta Y = \begin{bmatrix} \Delta \tau_1 \\ \vdots \\ \Delta \tau_M \\ \Delta f_1 \\ \vdots \\ \Delta f_M \\ \Delta \dot{f}_1 \\ \vdots \\ \Delta \dot{f}_M \\ \Delta g \end{bmatrix} \qquad \text{(XXXIII)}$$

$$\Delta Y = H\,\Delta X \qquad \text{(XXXIV)}$$

$$H = \begin{bmatrix} A_1^{\hat{x}} & A_1^{\hat{y}} & A_1^{\hat{z}} \\ \vdots & \vdots & \vdots \\ A_M^{\hat{x}} & A_M^{\hat{y}} & A_M^{\hat{z}} \\ B_1^{\hat{x}} & B_1^{\hat{y}} & B_1^{\hat{z}} \\ \vdots & \vdots & \vdots \\ B_M^{\hat{x}} & B_M^{\hat{y}} & B_M^{\hat{z}} \\ D_1^{\hat{x}} & D_1^{\hat{y}} & D_1^{\hat{z}} \\ \vdots & \vdots & \vdots \\ D_M^{\hat{x}} & D_M^{\hat{y}} & D_M^{\hat{z}} \\ A_g^{\hat{x}} & A_g^{\hat{y}} & A_g^{\hat{z}} \end{bmatrix} \qquad \text{(XXXV)}$$

*TDOA, FDOA, and DRDOA Expressions*

As shown at element 730 of Figure 7, from the Taylor Series expansions of TOA, FOA and DROA, a set of equations defining Time Difference of Arrival (TDOA), Frequency Difference of Arrival (FDOA) and Doppler Rate difference of Arrival (DRDOA) can be derived. For a cluster of $M$ S/C, there are a total number of $N_P$ **(equation XXXVI)** possible S/C pairs of TDOA measurements, $N_P$ FDOA measurements, and $N_P$ DRDOA measurements. The set of all S/C pairs can be denoted $\mathcal{L}$ **(equation XXXVII).**

$$N_P = \frac{M(M-1)}{2} \qquad \text{(XXXVI)}$$

$$\mathcal{L} = \{(i,j) \mid 1 \le j < i \le M\} \qquad \text{(XXXVII)}$$

The TDOA offset $\Delta\tau_{ij}$ can be defined as the difference between the TOA offsets $\Delta\tau_i$ and $\Delta\tau_j$ **(equation XXXVIII).** The FDOA offset $\Delta f_{ij}$ can be defined as the difference between the FOA offsets $\Delta f_i$ and $\Delta f_j$ **(equation XXXIX).** The DRDOA offset $\Delta \dot{f}_{ij}$ can be defined as the difference between the DROA offsets $\Delta \dot{f}_i$ and $\Delta \dot{f}_j$ **(equation XL).**

$$\Delta\tau_{ij} = \left(\Delta\tau_i - \Delta\tau_j\right)_{(i,j)\in\mathcal{L}} \qquad \text{(XXXVIII)}$$

$$\Delta f_{ij} = \left(\Delta f_i - \Delta f_j\right)_{(i,j)\in\mathcal{L}} \qquad \text{(XXXIX)}$$

$$\Delta \dot{f}_{ij} = \left(\Delta \dot{f}_i - \Delta \dot{f}_j\right)_{(i,j)\in\mathcal{L}} \qquad \text{(XL)}$$

All the TDOA, FDOA, DRDOA, and ESC offsets can be combined into one vector $\widetilde{\Delta Y}$ **(equation XLI)** which can be expressed as a function of the vector $\Delta Y$ **(equation XXXIII)** and a differencing matrix $\tilde{C}$ **(equation XLII).** The differencing matrix $\tilde{C}$ can be defined according to the number of the S/C (e.g. four S/C **(equation XLIII),** three S/C **(equation XLIV),** and two S/C **(equation XLV).**

$$\widetilde{\Delta Y} = \tilde{C}\,\Delta Y \qquad \text{(XLI)}$$

$$\tilde{C} = \begin{bmatrix} C & 0_{N_p\times M} & 0_{N_p\times M} & 0 \\ 0_{N_p\times M} & C & 0_{N_p\times M} & 0 \\ 0_{N_p\times M} & 0_{N_p\times M} & C & 0 \\ 0 & 0 & 0 & 1 \end{bmatrix} \qquad \text{(XLII)}$$

$$C = \begin{bmatrix} -1 & 1 & 0 & 0 \\ -1 & 0 & 1 & 0 \\ -1 & 0 & 0 & 1 \\ 0 & -1 & 1 & 0 \\ 0 & -1 & 0 & 1 \\ 0 & 0 & -1 & 1 \end{bmatrix}, M = 4 \qquad \text{(XLIII)}$$

$$C = \begin{bmatrix} -1 & 1 & 0 \\ -1 & 0 & 1 \\ 0 & -1 & 1 \end{bmatrix}, M = 3 \qquad \text{(XLIV)}$$

$$C = \begin{bmatrix} -1 & 1 \end{bmatrix}, M = 2 \qquad \text{(XLV)}$$

The TDOA, FDOA, DRDOA, and ESC offsets can be expressed as a linear system **(equation XLVI)** involving the differential design matrix $\tilde{H}$ **(equation XL VII)** and the displacement vector $\Delta X$ **(equation XXIII).**

$$\widetilde{\Delta Y} = \widetilde{H} \, \Delta X \qquad\qquad \text{(XLVI)}$$

$$\widetilde{H} = \check{C} \, H \qquad\qquad \text{(XLVII)}$$

*Measurement Error Covariance Matrix*

The TOA **(equation XV),** FOA **(equation XVII),** and DROA **(equation XVIX)** values are corrupted by measurement errors. By assumption, the error of the TOA $\tau_i$ follows a zero mean Gaussian distribution with an error covariance matrix $\Omega_\tau$ **(equation XLVIII).** The error of the FOA $f_i$ follows a zero mean Gaussian distribution with an error covariance matrix $\Omega_f$ **(equation XLIX).** The error of the DROA $\dot{f}_i$ follows a zero mean Gaussian distribution with an error covariance matrix $\Omega_{\dot{f}}$ **(equation L).** The TOA, FOA, and DROA errors are assumed to be uncorrelated. No measurement errors are considered for the ESC **(equation XXI)** since ESC is not a measurement equation. The error covariance matrix of the vectors offsets related to TOA, FOA, DROA, and the ESC $\Delta Y$ **(equation XXXIII)** is made up of the error covariance matrices $\Omega\tau$, $\Omega f$, and $\Omega_{\dot{f}}$ **(equation LI).**

$$\Omega_\tau = \begin{bmatrix} \sigma_{\tau,1}^2 & 0 & 0 \\ 0 & \ddots & 0 \\ 0 & 0 & \sigma_{\tau,M}^2 \end{bmatrix} \qquad\qquad \text{(XLVIII)}$$

$$\Omega_f = \begin{bmatrix} \sigma_{f,1}^2 & 0 & 0 \\ 0 & \ddots & 0 \\ 0 & 0 & \sigma_{f,M}^2 \end{bmatrix} \qquad\qquad \text{(XLIX)}$$

$$\Omega_{\dot{f}} = \begin{bmatrix} \sigma_{\dot{f},1}^2 & 0 & 0 \\ 0 & \ddots & 0 \\ 0 & 0 & \sigma_{\dot{f},M}^2 \end{bmatrix} \qquad\qquad \text{(L)}$$

$$cov(\Delta Y) = \begin{bmatrix} \Omega_\tau & 0_{M\times M} & 0_{M\times M} & 0 \\ 0_{M\times M} & \Omega_f & 0_{M\times M} & 0 \\ 0_{M\times M} & 0_{M\times M} & \Omega_{\dot{f}} & 0 \\ 0 & 0 & 0 & 0 \end{bmatrix} \qquad\qquad \text{(LI)}$$

The error covariance matrix $Q$ **(equation LII)** of the TDOA measurements, FDOA measurements, DRDOA measurements, and the ESC is expressed as a function of $cov(\Delta Y)$. The error covariance matrix $Q$ is heteroscedastic.

$$Q = cov\big(\Delta \widetilde{Y}\big) = \check{C} \, cov(\Delta Y) \, \check{C}^T \qquad\qquad \text{(LII)}$$

*Location estimation solution*

The linear system **(equation LIII)** involving the TDOA, FDOA, DRDOA (and optionally, for the case of a geolocated signal source, ESC) offsets is corrupted by a zero mean measurement error having a heteroscedastic covariance matrix $Q$ **(equation LII).**

$$\widetilde{\Delta Y} = \widetilde{H} \, \Delta X + \epsilon \;\; | \;\; \epsilon \sim \mathcal{N}(0, Q) \qquad\qquad \text{(LIII)}$$

The signal source location can be estimated by solving iteratively the linear system **(equation LIII)** with the assumption of a first guess of the transmitter geolocation. According to the Gauss-Markov theorem, the Ordinary Least Squares (OLS) estimator is the Best Linear Unbiased Estimator (BLUE) to the linear system **(equation LIII)** only if the measurement errors follow a zero mean Gaussian distribution with a homoscedastic error covariance matrix, which is not the case for the linear system **(equation LIII).** This can lead to problems with convergence of the search that attempts to minimise the OLS, and thus inaccuracies in the source location estimate can result, as well as inefficiencies. However, the inventors have realised that, according to Aitken theorem, the system **(equation LIII)** can be transformed to a linear system with a homoscedastic error covariance matrix by "whitening" the measurements errors using a whitening matrix $W$ **(equation LIV and equation LV),** as shown at element 740 of Figure 7. After the whitening operation, the Least Squares (LS) estimator becomes the BLUE, and thus search convergence is at least improved.

$$\widetilde{\Delta Y}_W = W\,\widetilde{\Delta Y} = \tilde{H}_W\,\Delta X + \epsilon_W \mid \epsilon_W = W\,\epsilon \mid \epsilon_W \sim \mathcal{N}(0,I) \qquad (\mathrm{LIV})$$

$$\tilde{H}_W = W\,\tilde{H} \qquad (\mathrm{LV})$$

*Whitening Matrix Derivation*

The whitening matrix $W$ **(equation LVI)** can be defined as the inverse of the Cholesky decomposition of the measurement error covariance matrix $Q$.

$$W = Q^{-1/2} \qquad (\mathrm{LVI})$$

The Cholesky decomposition $Q^{1/2}$ **(equation LVII)** can be expressed as a function of the Cholesky decomposition $\Omega_\tau^{1/2}$ **(equation LVIII),** the Cholesky decomposition $\Omega_f^{1/2}$ **(equation LIX),** and the Cholesky decomposition $\Omega_{\dot{f}}^{1/2}$ **(equation LX).**

$$Q^{1/2} = \begin{bmatrix} C\,\Omega_\tau^{1/2} & 0_{M\times M} & 0_{M\times M} & 0 \\ 0_{M\times M} & C\,\Omega_f^{1/2} & 0_{M\times M} & 0 \\ 0_{M\times M} & 0_{M\times M} & C\,\Omega_{\dot{f}}^{1/2} & 0 \\ 0 & 0 & 0 & 0 \end{bmatrix} \qquad (\mathrm{LVII})$$

$$\Omega_\tau^{1/2} = \begin{bmatrix} \sigma_{\tau,1} & 0 & 0 \\ 0 & \ddots & 0 \\ 0 & 0 & \sigma_{\tau,M} \end{bmatrix} \qquad (\mathrm{LVIII})$$

$$\Omega_f^{1/2} = \begin{bmatrix} \sigma_{f,1} & 0 & 0 \\ 0 & \ddots & 0 \\ 0 & 0 & \sigma_{f,M} \end{bmatrix} \qquad (\mathrm{LIX})$$

$$\Omega_{\dot{f}}^{1/2} = \begin{bmatrix} \sigma_{\dot{f},1} & 0 & 0 \\ 0 & \ddots & 0 \\ 0 & 0 & \sigma_{\dot{f},M} \end{bmatrix} \qquad (\mathrm{LX})$$

The square matrix $Q^{1/2}$ is not invertible because the matrix is singular and not positive definite. The matrix $Q^{1/2}$ is singular because of the presence of a zero in its diagonal. The matrix $Q^{1/2}$ is not positive definite because $Q^{1/2}$ is not a full-rank matrix, which is the consequence of considering all the linearly dependent and independent TDOA, FDOA, and DRDOA measurements.

The inventors have realised that the inversion matrix problem can be overcome by using the generalised inverse matrix $Q^{1/2\mathscr{g}}$ instead of the regular inverse matrix $Q^{-1/2}$. The generalised inverse matrix of $Q^{1/2\mathscr{g}}$ can be computed using the Singular Value Decomposition (SVD) of $Q^{1/2}$ **(equation LXI)**. The matrix $Q^{1/2\mathscr{G}}$ **(equation LXII)** can be expressed as a function of two square orthogonal matrices $V$ and $U$, and the generalised inverse matrix $S^{\mathscr{G}}$ of the matrix $S$, wherein the diagonal elements of the matrix $S$ contain the singular values of $Q^{1/2}$. The error covariance matrix of the whitened system **(equation LXIII)** can be derived as a function of the orthogonal matrix $V$ and the matrix $\Psi$ **(equation LXIV)**. The matrix $\Psi$ **(equation LXIV)** is composed of the matrix $P$ **(equation LXV)** containing the identity matrix $I$.

$$Q^{1/2} = U\,S\,V^T \tag{LXI}$$

$$Q^{1/2\mathscr{G}} = V\,S^{\mathscr{G}}\,U^T \tag{LXII}$$

$$cov\left(\Delta\widetilde{Y}_W\right) = V\,\Psi\,V^T \tag{LXIII}$$

$$\Psi = \begin{bmatrix} P & 0_{M\times M} & 0_{M\times M} & 0 \\ 0_{M\times M} & P & 0_{M\times M} & 0 \\ 0_{M\times M} & 0_{M\times M} & P & 0 \\ 0 & 0 & 0 & 0 \end{bmatrix} \tag{LXIV}$$

$$P = \begin{bmatrix} I_{(M-1)\times(M-1)} & 0 \\ 0 & 0 \end{bmatrix} \tag{LXV}$$

### *Dilution of Precision Derivation*

By way of an optional refinement, as shown at element 750 of Figure 7, a measure of "Dilution of Precision" (DOP) can be determined and used to determine a level of confidence in the location estimation. Dilution Of Precision (DOP) is defined as the ratio of the Root Mean Square Error (RMSE) of the signal location estimation to the RMSE of the signal measurements involved. Both position estimation and measurement RMSEs can be derived from the error covariance matrix of the displacement vector $\Delta X$ (equation **XXIII**) and the error covariance matrix of the whitened system $\Delta\widetilde{Y}_W$ **(equation LIV)**.

The expression of $\Delta X$ **(equation LXVI)** can be derived from the whitened linear system **(equation LXIII)**. The error covariance matrix of $\Delta X$ can be derived after assuming that the displacement vector $\Delta X$ is corrupted by errors following a zero mean Gaussian distribution **(equation LXVII)**.

$$\Delta X = \left(\tilde{H}_W^T\,\tilde{H}_W\right)^{-1}\tilde{H}_W^T\,\Delta\tilde{Y}_W \tag{LXVI}$$

$$\begin{aligned} cov(\Delta X) &= E[\Delta X\,\Delta X^T] \\ &= \left(\tilde{H}_W^T\,\tilde{H}_W\right)^{-1}\tilde{H}_W^T\,V\,\Psi\,V^T\left(\left(\tilde{H}_W^T\,\tilde{H}_W\right)^{-1}\tilde{H}_W^T\right)^T \end{aligned} \tag{LXVII}$$

By assumption, the errors of $\Delta X$ are dimension independent, which results in a diagonal error covariance matrix $cov(\Delta X)$ **(equation LXVIII)**. The Position DOP (PDOP) is defined as the root square of the trace of the matrix $cov(\Delta X)$ **(equation LXIX)**. Note that the Geometric DOP (GDOP) cannot be computed for a combination of TDOA, FDOA, DROA, and ESC, because of the non-homogeneity of the measurement units between TDOA (in seconds), FDOA (in hertz), and DRDOA (in hertz per second).

$$cov(\Delta X) \approx \begin{bmatrix} \sigma_x^2 & 0 & 0 \\ 0 & \sigma_y^2 & 0 \\ 0 & 0 & \sigma_z^2 \end{bmatrix} \qquad\qquad \text{(LXVIII)}$$

$$PDOP = \sqrt{\sigma_x^2 + \sigma_y^2 + \sigma_z^2}$$
$$= \sqrt{cov(\Delta X)_{(1,1)} + cov(\Delta X)_{(2,2)} + cov(\Delta X)_{(3,3)}} \qquad \text{(LXIX)}$$

*Position Estimation Algorithm*

As illustrated at element 760 of Figure 7, a numerical nonlinear least-squares optimisation algorithm can then be used to solve the whitened system. The optimisation algorithm does that e.g. by minimising a cost function (CAF) representing an error between measured TDOAs, FDOAs and DRDOAs (as calculated based on received data streams from respective pairs of S/C), and TDOAs, FDOAs, and DRDOAs computed using the position estimate candidate. Preferably but optionally, the optimisation algorithm is iterative and uses a multi start approach so as to find a position estimate (from among multiple candidate positions) that better minimises the cost function, compared to non-iterative and/or non-multi-start algorithms. By way of example, in a multi-start approach, a set of random initial points are generated inside the S/C cluster coverage area, and these lead to a set of candidate positions (which can for example be reduced in the case of a signal source that is known to be on the Earth's surface, i.e. known to be geolocated, by filtering out candidates that are not on the Earth's surface). The best position candidate is the one that yields the lowest cost function value, and that candidate is the one chosen as the estimated source location.

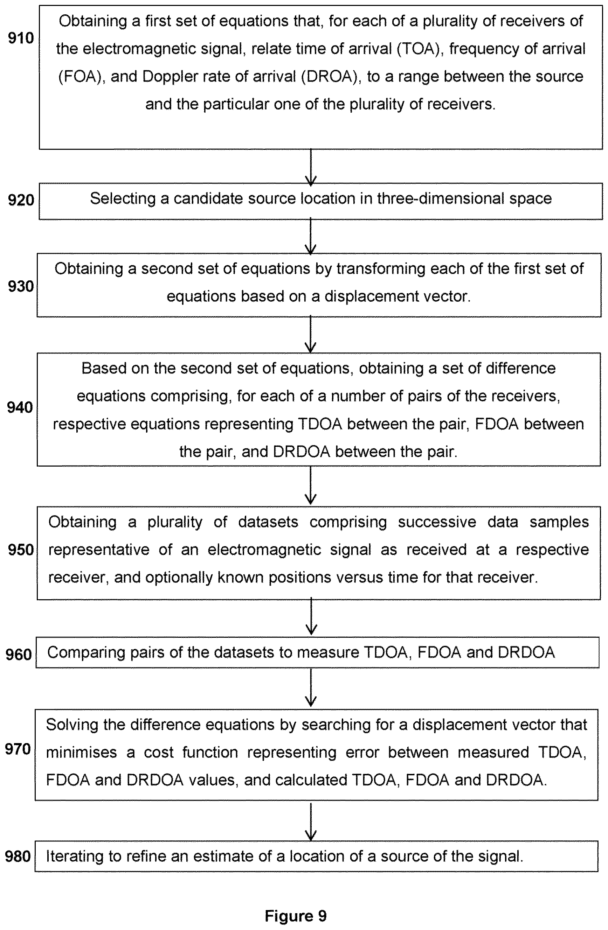

Describing the above disclosure relating to equations XV to LXIX In more general terms, a further method that can be used in the estimation of a location of a source of an electromagnetic signal will now be described with reference to Figure 9.

In a first step 910, a first set of equations are obtained that, for each of a plurality of receivers of the electromagnetic signal, relate time of arrival (TOA), frequency of arrival (FOA), and Doppler rate of arrival (DROA), to a range between the source and the particular one of the plurality of receivers. For example, equations XV to XX are such equations.

At step 920, a candidate source location is selected in three-dimensional space. A candidate source location is a location that is to be tested to see if it could be the true location of the signal source. The testing of whether or not the candidate location could or could not be the true location of the source involves calculating what the Time Difference of Arrival, Frequency Difference of Arrival, and Doppler Rate Difference of Arrival would be for various pairs of receivers located at known locations if the signal source was located at the candidate location, and then checking how those calculated values compare with corresponding measured values that are derived by comparing pairs of the sample streams. For example, such measured values can be found using the method described above with reference to equations I to XIV and Figures 5 and 6 which can be used to derive a time offset, a frequency offset, and optionally also a Doppler rate offset (or acceleration offset) by comparing pairs of sample streams from corresponding pairs of receiver-bearing vehicles.

At step 930, the first set of equations are transformed into a second set of equations based on a displacement vector (equation XXIII) that is defined as a difference between the candidate source location and the true location of the signal source (whatever that may be). For example, the displacement vector can comprise a difference between an x coordinate of the candidate source location and an x coordinate of the source's location, a difference between a y coordinate of the candidate source location and a y coordinate of the source's location, and a difference between a z coordinate of the candidate source location and a z coordinate of the source's location. The transformation can be performed using the Taylor Series (TS) expansion that is described herein with reference to equations XXIV to XXXV. Optionally, the TS expansion is a first-order TS expansion employing the candidate source location as a linearisation point.

At step 940, based on the second set of equations, a set of difference equations are obtained. The set of difference equations comprise, for each of a number of pairs of the receivers, respective equations representing a Time Difference of Arrival between the pair, a Frequency Difference of Arrival between the pair, and a Doppler Rate Difference of Arrival between the pair. This is described herein with reference to equations XXXVIII to XL.

At step 950, a plurality of datasets are obtained, each comprising successive data samples representative of the electromagnetic signal as received at a respective one of the receivers. Preferably but optionally each dataset further comprises known positions versus time for the respective receiver.

At step 960, pairs of datasets (corresponding to the pairs of receivers for which the set of difference equations were determined) are compared, to thereby determine respective TDOA, FDOA and DRDOA (measured) values for each of the pairs of receivers. For example, such measured values can be found using the method described above with reference to equations I to XIV and Figures 5 and 6 which can be used to derive a time offset, a frequency offset, and optionally also a Doppler rate offset (or acceleration offset) by comparing pairs of sample streams from corresponding pairs of receiver-bearing vehicles.

At step 970, a solution is sought for the set of difference equations, by searching for a displacement vector that minimises a cost function representing an error between corresponding ones of (i) the measured TDOA, measured FDOA and measured DRDOA values, and (ii) TDOA, FDOA and DRDOA values calculated using the set of difference equations based on the known positions of the receivers versus time. Optionally, multiple starting points are used, and optionally each starting point can be randomly or pseudo-randomly generated. Optionally, candidate source locations are constrained to lie on the Earth's surface, e.g. the first and second sets of equations can further comprise an equation constraining the source's true location to lie on a sphere corresponding to the Earth's surface.

At step 980, the candidate source location is modified using the displacement vector that was found to minimise the cost function, and then the steps are iterated. Thus it will be seen that in each iteration the displacement vector that is found to best minimise the cost function is used to refine the candidate source location, and then the process is repeated so as to successively approach the true source location. The final candidate source location is taken to be the estimated source location.

Preferably but optionally, a whitening function (see equations LVI to LXV) is applied to one or more (and preferably all) of the difference equations, to thereby produce a whitened set of difference equations which are instead used in the searching. By using a whitened set of difference equations in the search, convergence of the search to the true source location is made more likely.

Optionally (referring to equations LVI to LXV), the whitening function comprises a matrix that is the inverse of a Cholesky decomposition of a measurement error covariance matrix (see equations XLVIII to LV), wherein the equations of the first set are combined with the measurement error covariance matrix to model measurement errors that are assumed to be present in the measured TDOA, FDOA and DRDOA values. Optionally, the measurement error covariance matrix includes a first error covariance matrix defining a TDOA error having a zero mean Gaussian distribution, a second error covariance matrix defining a FDOA error having a zero mean Gaussian distribution, and a third error covariance matrix defining a DRDOA error having a zero mean Gaussian distribution. Optionally: the TDOA error comprises the Standard Deviation Error of the measured TDOA, the FDOA error comprises the Standard Deviation Error of the measured FDOA, and the DRDOA error comprises the Standard Deviation Error of the measured DRDOA; and/or the Cholesky decomposition of the measurement error covariance matrix comprises a Cholesky decomposition of the first error covariance matrix defining the TOA error, a Cholesky decomposition of the second error covariance matrix defining the FOA error, and a Cholesky decomposition of the third error covariance matrix defining the DROA error.

Optionally, the inversion of the Cholesky decomposition comprises computing the generalised inverse matrix using the Singular Value Decomposition of the Cholesky decomposition, and further optionally the generalised inverse matrix is expressed as a function of two square orthogonal matrices V and U, and the generalised inverse matrix of a matrix S in which the diagonal elements of the matrix S contain the singular values of the Cholesky decomposition, and further optionally, measurement errors that are assumed to be present in the measured TDOA, FDOA and DRDOA values are modelled in the whitened difference equations by deriving an error covariance matrix of the whitened difference equations as a function of the orthogonal matrix V and a further matrix composed of a matrix P containing the identity matrix I. This has been found to be particularly convenient and effective.

Optionally, the method can further comprise deriving a measure of "Dilution of Precision" DOP which is defined as the ratio of the Root Mean Square Error (RMSE) of the estimated source location compared to the RMSE of the determined positions of the receivers. In other words, the DOP is a measure of how much worse the precision of the estimated source location is compared to the precision of the signal reception/sampling and receiver location measurement (the estimated source location cannot be found to a better precision than the precision of the measurements that it is based upon). Optionally the iterating is continued until the DOP is below a threshold.

Each of the receivers is typically carried by a vehicle, and the vehicles are controlled by a controller (e.g. GMS 300) to move in a certain way so as to maintain a predetermined relative configuration/spacing. For example, the method can comprise causing the vehicles to move in a formation comprised of respective vehicle orbits, said orbits being controlled according to a minimum distance between vehicles. Optionally the DOP can be used to determine the minimum distance, since DOP is reduced (i.e. accuracy is increased) by greater inter-vehicle distance, albeit at the expense of reduced coverage area.

Advantageously in terms of reduced operating cost, by using the above techniques which use DRDOA as well as TDOA and FDOA, it is possible to locate a signal source using only two vehicles/receivers.

Transmitter Power Determination

It is desirable to estimate the transmitter power of the signal source, without a-priori knowledge of the transmitter and without knowledge of attenuation factors. Such an estimate can be useful, for example, to determine the type of signal source (e.g. a relatively low-power personal radio transmitter, or a vehicle or marine-based transmitter of a much larger size).

Additionally, the joint use of TDOA, FDOA, and DRDOA in the above-disclosed position estimation algorithm requires a whitening process, which involves determining the Standard Deviation Errors (STDE) of the TDOA, FDOA, and DRDOA calculations. The STDE of the calculations depend on the Effective Signal-to-Noise Ratio (ESNR), which is a metric indicating the quality of the correlation between two sample streams, and depends on the Signal-to-Noise Ratio (SNR) of each sample stream.

As previously noted in the section above titled "*Received Sample Stream Model*", the received Sample Stream $r_i$ **(equation I)** of the $i^{th}$ S/C at the $n^{th}$ epoch is composed of a signal component $x_i$ and a noise component $w_i$. The Sample Stream is composed of $N$ samples. The sampling rate of the received Sample Stream is $f_s$. The signal component $x_i$ **(equation II)** is composed of a signal of interest $x$ that is common to all the S/C but can be considered to be time shifted by $d_i$, frequency shifted by $v_i$, and attenuated by the root square of the signal component's power $P_i$ compared with the signal as it was emitted at the source. The signal component $x_i$ is also affected by the Doppler rate $\dot{v}_i$ and the Doppler acceleration $\ddot{v}_i$, The signal of interest (which is common to all S/C) is composed of $N$ samples and has a unit power **(equation III).** For convenience, those equations are repeated below. The noise component $w_i$ is an Additive White Gaussian Noise (AWGN) with a variance $\sigma_i^2$. The Doppler rate is assumed to be zero for the purpose of transmitter power determination, and does not impact the derivation of the ESNR estimation solution.

$$r_i(n) = x_i(n) + w_i(n) \qquad\qquad (I)$$

$$x_i(n) = \sqrt{P_i}\, x(n + d_i) e^{j2\pi n \frac{v_i}{f_s}} \qquad\qquad (II)$$

$$\frac{1}{N} \sum_{n=0}^{N-1} |x(n)|^2 = 1 \qquad\qquad (III)$$

*SNR Expression*

The SNR per symbol (i.e., the symbol energy to noise power spectral density ratio) $\gamma_i$ **(equation LXX)** associated to the received Sample stream $r_i$ is defined as the ratio of the signal component's power $P_i$ and the noise power $\sigma_i^2$ multiplied by the ratio $R$ **(equation LXXI)** representing the noise bandwidth $B_N$ over the signal baud rate $f_b$ (i.e., symbol rate). The baud rate can be approximated with the signal bandwidth if the baud rate is unknown. Note that the exact relation between the baud rate and the signal bandwidth depends on the modulation used, pulse shaping filter, and the modulation index for Continuous Phase Modulations (CPM), hence the approximation.

$$\gamma_i = R \frac{P_i}{\sigma_i^2} \qquad\qquad (LXX)$$

$$R = \frac{B_N}{f_b} \qquad\qquad (LXXI)$$

*ESNR Expression*

The ESNR $\gamma_{ij}$ **(equation LXXII)** associated with the Sample streams pair $(i,j)$ is a function of the SNR per symbol of the Sample stream of the $i_{th}$ S/C and the SNR per symbol of the Sample stream of the $j_{th}$ S/C.

$$\frac{1}{\gamma_{ij}} = \frac{1}{2}\left( \frac{1}{\gamma_i} + \frac{1}{\gamma_j} + \frac{1}{\gamma_i \gamma_j} \right) \qquad\qquad (LXXII)$$

*Further detail regarding Cross Ambiguity Function*

The Cross Ambiguity Function (CAF) **(equation IV,** simplified as **equation LXIII** when Doppler rate is assumed zero) computes the correlation between $r_i$ and $r_j$ after applying a time shift $k$ and a frequency shift $v$ between them. The number of samples involved in the computation are $N$. The CAF can be expressed using the signal of interest x and the noise components $w_i$ and $w_j$ as a sum of four terms **(equation LXXIV):**

    i An auto-correlation term $\Psi_{xx}(k,v)$ of the signal of interest x **(equation LXXV).**
    ii A cross-correlation term $\Psi_{xw_j}(k,v)$ **(equation LXXVI)** between the signal of interest x and the noise component $w_j$.
    iii A cross-correlation term $\Psi_{w_ix}(k,v)$ **(equation LXXVII)** between the signal of interest x and the noise component $w_i$.
    iv A noise cross-correlation term $\Psi_{w_iw_j}(k,v)$ **(equation LXXVIII)** between the noise component $w_j$ and the noise component $w_i$.

$$CAF_{ij}(k,v) = \sum_{m=0}^{N-1} r_i(m)r_j^*(m+k)e^{-\frac{j2\pi m}{f_s}v} \tag{LXXIII}$$

$$CAF_{ij}(k,v) = \sqrt{P_i}\sqrt{P_j}e^{-\frac{j2\pi k}{f_s}v_j}\Psi_{xx}(k,v) + \sqrt{P_i}\Psi_{xw_j}(k,v) + \sqrt{P_j}\Psi_{w_ix}(k,v) + \Psi_{w_iw_j}(k,v) \tag{LXXIV}$$

$$\Psi_{xx}(k,v) = \sum_{m=0}^{N-1} x(m+d_i)x^*(m+k+d_j)e^{\frac{j2\pi m}{f_s}((v_i-v_j)-v)} \tag{LXXV}$$

$$\Psi_{xw_j}(k,v) = \sum_{m=0}^{N-1} x(m+d_i)w_j^*(m+k)e^{-\frac{j2\pi m}{f_s}(v-v_i)} \tag{LXXVI}$$

$$\Psi_{w_ix}(k,v) = \left(\sum_{m=0}^{N-1} x^*(m+k+d_j)w_i(m)e^{-\frac{j2\pi m}{f_s}(v+v_j)}\right)e^{-\frac{j2\pi k}{f_s}v_j} \tag{LXXVII}$$

$$\Psi_{w_iw_j}(k,v) = \sum_{m=0}^{N-1} w_i(m)w_j^*(m+k)e^{-\frac{j2\pi m}{f_s}v} \tag{LXXVIII}$$

The CAF is evaluated at $k=\Delta d_{ij}$ and $v=\Delta v_{ij}$ (equation LXXIX), which results in the following expressions of the correlation terms:

    i The auto-correlation term $\Psi_{xx}(\Delta d_{ij},\Delta v_{ij})$ equals N (equation LXXX) according to the power value of x (equation III).
    ii The cross-correlation term $\Psi_{xw_j}(\Delta d_{ij},\Delta v_{ij})$ **(equation LXXXI)** is a finite sum of the modified noise sample $\Upsilon_{xw_j}(m)$ **(equation** LXXXII), which represents the product of the noise sample $w_j$ and the signal of interest sample x. The modified noise component $\Upsilon_{xw_j}$ **(equation LXXXII)** is AWGN as the noise sample $w_j$ is AWGN.
    iii The cross-correlation term $\Psi_{w_ix}(\Delta d_{ij},\Delta v_{ij})$ **(equation LXXXIII)** is a finite sum of the modified noise sample $\Upsilon_{w_ix}(m)$ **(equation LXXXIV)** multiplied by a phase shift. The modified noise component $\Upsilon_{w_ix}$ **(equation LXXXIV)** is AWGN.
    iv The noise cross-correlation term $\Psi_{w_iw_j}(\Delta d_{ij},\Delta v_{ij})$ **(equation LXXXV)** is a finite sum of the modified noise sample $\Upsilon_{w_iw_j}$

(m) **(equation LXXXVI),** which is the product of the noise samples $w_i$ and $w_j^*$. The noise term $\Upsilon_{w_iw_j}$ **(equation LXXXVI)** has a zero mean.

$$\begin{cases}\Delta d_{ij} = d_i - d_j \\ \Delta v_{ij} = v_i - v_j\end{cases} \tag{LXXIX}$$

$$\Psi_{xx}(\Delta d_{ij}, \Delta v_{ij}) = N \qquad \text{(LXXX)}$$

$$\Psi_{xw_j}(\Delta d_{ij}, \Delta v_{ij}) = \sum_{m=0}^{N-1} \Upsilon_{xw_j}(m) \qquad \text{(LXXXI)}$$

$$\Upsilon_{xw_j}(m) = x(m + d_i)w_j^*(m + \Delta d_{ij})e^{\frac{j2\pi m}{f_s}v_j} \qquad \text{(LXXXII)}$$

$$\Psi_{w_i x}(\Delta d_{ij}, \Delta v_{ij}) = \left(\sum_{m=0}^{N-1} \Upsilon_{w_i x}(m)\right) e^{-\frac{j2\pi k}{f_s}v_j} \qquad \text{(LXXXIII)}$$

$$\Upsilon_{w_i x}(m) = x^*(m + d_i)w_i(m)e^{-\frac{j2\pi m}{f_s}v_i} \qquad \text{(LXXXIV)}$$

$$\Psi_{w_i w_j}(\Delta d_{ij}, \Delta v_{ij}) = \sum_{m=0}^{N-1} \Upsilon_{w_i w_j}(m) \qquad \text{(LXXXV)}$$

$$\Upsilon_{w_i w_j}(m) = w_i(m)w_j^*(m + \Delta d_{ij})e^{-\frac{j2\pi m}{f_s}\Delta v_{ij}} \qquad \text{(LXXXVI)}$$

The CAF expression at $(\Delta d_{ij}, \Delta v_{ij})$ **(equation LXXXVII)** is provided as a function of the modified noise terms. The weak law of large numbers applied on the modified noise terms $\Upsilon_{xwj}$ **(equation LXXXVIII),** $\Upsilon_{wix}$ **(equation LXXXIX),** and $\Upsilon_{wiwi}$ **(equation XC)** leads to an expression of the CAF at $(\Delta d_{ij}, \Delta v_{ij})$ **(equation XCI)** without the noise components. The correlation peak value $C_{ij}$ defined as the module of the CAF at $(\Delta d_{ij}, \Delta v_{ij})$ **(equation XCII)** over the number of samples $N$ is thus solely a function of the powers $P_i$ and $P_j$.

$$CAF_{ij}(\Delta d_{ij}, \Delta v_{ij}) = N\left(\sqrt{P_i}\sqrt{P_j}e^{-\frac{j2\pi}{f_s}\Delta d_{ij}} + \frac{\sqrt{P_i}}{N}\sum_{m=0}^{N-1}\Upsilon_{xw_j}(m) + \frac{\sqrt{P_j}}{N}\sum_{m=0}^{N-1}\Upsilon_{w_i x}(m) + \frac{1}{N}\sum_{m=0}^{N-1}\Upsilon_{w_i w_j}(m)\right) \qquad \text{(LXXXVII)}$$

$$\frac{1}{N}\sum_{m=0}^{N-1}\Upsilon_{xw_j}(m) \approx 0 \qquad \text{(LXXXVIII)}$$

$$\frac{1}{N}\sum_{m=0}^{N-1}\Upsilon_{w_i x}(m) \approx 0 \qquad \text{(LXXXIX)}$$

$$\frac{1}{N}\sum_{m=0}^{N-1}\Upsilon_{w_i w_j}(m) \approx 0 \qquad \text{(XC)}$$

$$CAF_{ij}(\Delta d_{ij}, \Delta v_{ij}) \approx N\sqrt{P_i}\sqrt{P_j}e^{-\frac{j2\pi}{f_s}\Delta d_{ij}} \qquad \text{(XCI)}$$

$$C_{ij} = \frac{1}{N}\left|CAF_{ij}(\Delta d_{ij}, \Delta v_{ij})\right|$$
$$\approx \sqrt{P_i}\sqrt{P_j} \qquad\qquad \text{(XCII)}$$

### ESNR Power Based Expression

In the context of the above background/derivation **(equations LXX to XCII),** the inventors have realised that the received sample stream power $P_i^r$ **(equation XCIII)** of the $i_{th}$ S/C can be defined as the mean of the square module of the received samples $r_i(n)$. The received Sample stream power $P_i^r$ of the $i_{th}$ S/C can be approximated as a sum of the signal component's power $P_i$ and the noise power $\sigma_i^2$ **(equation XCIV).** After replacing the noise power $\sigma_i^2$ in the SNR expression $\gamma_i$ **(equation XCV),** and using the link between the SNR and ESNR **(equation XCVI),** the ESNR expression of the pair ($i,j$) **(equation XCVII)** becomes a function of the received Sample streams powers ( $P_i^r$ and $P_j^r$ ), the signal component powers ($P_i$ and $P_j$), and the ratio $R$ **(equation LXXI).**

$$P_i^r = \frac{1}{N}\sum_{n=0}^{N-1}|r_i(n)|^2 \qquad\qquad \text{(XCIII)}$$

$$P_i^r \approx P_i + \sigma_i^2 \qquad\qquad \text{(XCIV)}$$

$$\gamma_i \approx \frac{RP_i}{P_{r_i} - P_i} \qquad\qquad \text{(XCV)}$$

$$\frac{1}{\gamma_{ij}} = \frac{1}{2}\left(\frac{1}{\gamma_i} + \frac{1}{\gamma_j} + \frac{1}{\gamma_i\gamma_j}\right) \qquad\qquad \text{(XCVI)}$$

$$\frac{1}{\gamma_{ij}} = \frac{1}{2R}\left(\frac{\left(\frac{1}{R}-2\right)P_iP_j + \frac{P_{r_i}P_{r_j}}{R} + \left(1-\frac{1}{R}\right)\left(P_{r_i}P_j + P_{r_j}P_i\right)}{P_iP_j}\right) \qquad \text{(XCVII)}$$

### ESNR Estimation Using the CAF

Given the ESNR expression of the pair ($i,j$) **(equation XCVII),** the estimation of the ESNR thus requires knowledge of the received sample streams powers ( $P_i^r$ and $P_j^r$ ), the signal component powers ($P_i$ and $P_j$), the noise bandwidth $B_N$, and the symbol rate $f_b$. The computation of the parameters required for the ESNR estimation are now detailed:

- The received sample streams powers **(equation XCVIII)** can be computed by taking the mean of the square module of received samples and can then be normalised to the same power value $P_r$ **(equation XCVIII)** without loss of generality.
- The ESNR estimation occurs after channelling (e.g. bandpass filtering to block all but a channel of interest 410), which sets the noise bandwidth $B_N$ value as the channel bandwidth value. The transmission frequencies are not known a-priori, therefore assumptions are made to isolate the transmissions into the VHF frequency bands and so assign them nominal frequencies free from variation due to Doppler effects, transmitter instability and receiver oscillator drift. The Channelling sub-system isolates specific channels from the entire band so that they can be processed independently while minimising interference, and is composed of two stages. The first stage is downconversion, which translates the channel to the baseband frequency. The second stage is filtering (e.g. using a Finite Impulse Response (FIR) filter).

The example FIR filter advantageously presents a linear phase-frequency response to avoid any phase distortion being imposed on the processed I/Q streams. By way of example, the channel bandwidth is usually 25kHz for maritime channels: as shown in Figure 4, the channelling within the VHF marine allocation has a channel spacing of 25 kHz, and the signal bilateral bandwidth is assumed to be 16 kHz falling inside the 25kHz channel bandwidth, with the centre carrier frequency being centred on the channel. In the case of other radio signals the channel bandwidth can be any bandwidth used by any particular type of radio communication of interest, and equally other types of electromagnetic signal (such as light) can be filtered by appropriate filtering means according to a channel bandwidth applying to communication protocols used with such types of signal. The filtering can be performed at the receiving vehicle (e.g. station), either by analogue filtering circuitry means or by digital (including potentially software) means. Alternatively, the filtering can be performed at the ground-based system (e.g. GMS 300) that receives the sampled data streams by digitally processing the sampled data streams.

- The symbol rate $f_b$ depends on the communication standard used (e.g. the symbol rate is known/defined for a digital communication system such as the Automatic Identification System, AIS, and for other communications protocols). For frequency modulated analogue data (such as voice), the symbol rate can be defined as the highest frequency component present in the modulating signal. The symbol rate can be approximated using the signal bandwidth $B_s$ **(equation XCIX)** because the location estimation algorithms disclosed herein do not rely upon the symbol rate (e.g. the position estimation algorithms described herein do not include symbol rate estimation). By way of example, the VHF equipment used for maritime communications services are limited by international agreement to 16kHz bandwidth.
- The ESNR **(equation C)** can thus be expressed using the CAF correlation peak values $C_{ij}$ and the sum of the power components ($P_i$ and $P_j$).
- The sum of the signal component powers ($P_i$ and $P_j$) **(equation CI)** can be computed using the CAF correlation peak values $C_{ij}$ according to the number of S/C used.

$$P_r = P_i^r = P_j^r \qquad\qquad\text{(XCVIII)}$$

$$f_b \approx \frac{B_s}{2} \qquad\qquad\text{(XCIX)}$$

$$\frac{1}{\gamma_{ij}} = \frac{1}{2R}\left(\left(\frac{1}{R} - 2\right) + \frac{P_r^2}{R}\frac{1}{C_{ij}^2} + \left(1 - \frac{1}{R}\right)P_r\frac{P_j + P_i}{C_{ij}^2}\right) \qquad\qquad\text{(C)}$$

$$P_i + P_j = C_{ij}\left(\frac{C_{ik}}{C_{jk}} + \frac{C_{jk}}{C_{ik}}\right), k \neq \{i,j\} \qquad\qquad\text{(CI)}$$

*ESNR Estimation for Four S/C*

Six correlation peaks ($C_{21}$, $C_{31}$, $C_{41}$, $C_{32}$, $C_{42}$, and $C_{43}$) are available for four S/C (there being six possible pairs of four S/C). Each sum of the signal component powers ($P_i$ and $Pj$) **(equation CI)** has two expressions (for example: the sum of $P_1$ and $P_2$ can be expressed using ($C_{21}$, $C_{31}$, $C_{32}$) and ($C_{21}$, $C_{41}$, $C_{42}$)). The ESNR can be estimated for each expression of the sum of the powers and averaged out to get the final estimation of the ESNR $\gamma_{ij}$.

*ESNR Estimation for Three S/C*

Three correlation peaks ($C_{21}$, $C_{31}$, and $C_{32}$) are available for three S/C (there being three possible pairs of three S/C). Each sum of the signal component powers ($P_i$ and $Pj$) has one expression. The ESNR $\gamma_{ij}$ **(equation C)** can be estimated after computing the sum of the signal component powers **(equation CI).**

*ESNR Estimation for Two S/C*

One correlation peak $C_{12}$ is available when two S/C are present (there being only one possible pair of two S/C). The ESNR estimation can be achieved by assuming that the signal component powers ($P_1$ and $P_2$) are the same. The correlation peak thus **(equation CII)** equals $P_1$ or $P_2$. The ESNR $\gamma_{21}$ **(equation CIII)** is thus provided as a function of the correlation peak.

$$C_{21} = P_1 = P_2 \qquad\qquad (\text{CII})$$

$$\frac{1}{\gamma_{21}} = \frac{1}{2R}\left(\left(\frac{1}{R} - 2\right) + \frac{P_r^2}{RC_{21}^2} + \left(1 - \frac{1}{R}\right)\frac{P_r}{C_{21}}\right) \qquad\qquad (\text{CIII})$$

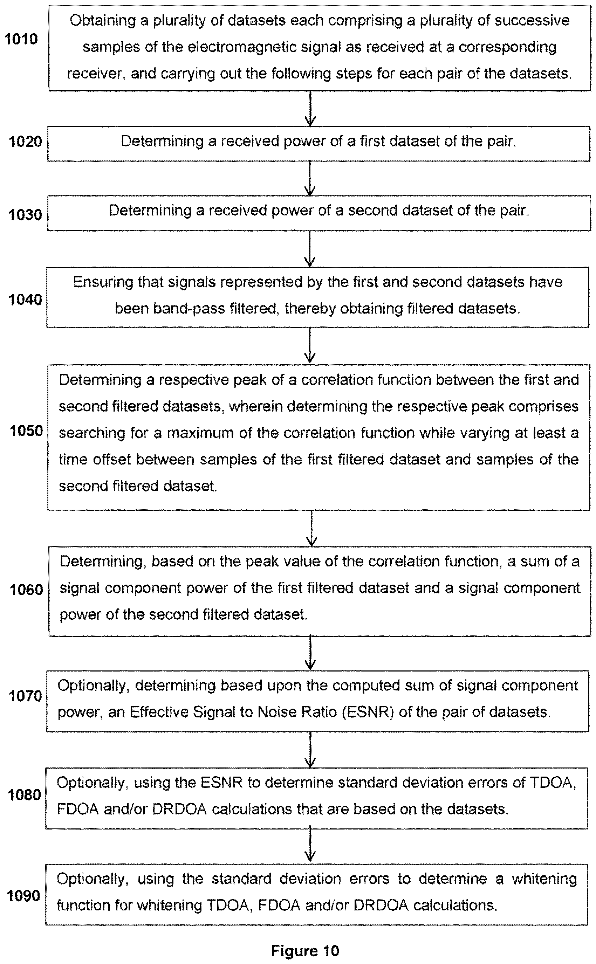

The disclosure of the above disclosure of determining transmitter power (with reference to equations LXX to CIII) will now be more generally described with reference to Figure 10, in terms of a method that can be used to determine the power of an electromagnetic signal emission, such as a radio transmission.

At step 1010 a plurality of datasets is obtained, each dataset comprising a plurality of successive samples of the electromagnetic signal as received at a corresponding receiver. Then for each of one or more pairs of the datasets, the following steps (1020 to 1060) are performed:

At step 1020, a received power of a first dataset of the pair is determined.
At step 1030, a received power of a second dataset of the pair is determined.

The determination of the received power of the first and second datasets of the pair can be performed at the respective receivers, which can send the determined power information to the processing unit (e.g. GMS 300) which processes the datasets to estimate the signal source's location. Alternatively the processing unit may be able to derive the received powers from the datasets that it obtains from the vehicles.

At step 1040, it is ensured that the received signals represented in the first and second datasets have been band-pass filtered, thereby obtaining first and second filtered datasets. The filtering, as represented in Figure 4, excludes signal components and noise components that have frequencies that are outside of a frequency band of interest, such as a signal channel bandwidth of interest (for example, marine communications use a 25kHz channel bandwidth). The filtering excludes noise from outside of the channel bandwidth of interest, and thereby makes it possible to determine the signal to noise ratio within the channel bandwidth. The filtering may be carried out at the receiving vehicle by analogue filtering or by digital (and/or software) filtering, and/or the filtering may be carried out at the processing unit (e.g. GMS 300) by digital processing of the datasets.

At step 1050, a correlation function peak between each pair of datasets is determined, wherein determining the respective peak comprises searching for a maximum of the correlation function while varying at least a time offset between samples of the first filtered dataset and samples of the second filtered dataset. Optionally, determining the respective peak of the correlation function comprises searching for a maximum of the correlation function while also varying a frequency offset between samples of the first filtered dataset and samples of the second filtered dataset. For example, the method described with reference to Figures 5 and 6, or another method, can be used to find a correlation peak such as the CAF.

At step 1060, based on the peak value of the correlation function, a respective sum of a signal component power of the first filtered dataset and a signal component power of the second filtered dataset can be determined (see equation CI).

Optionally, the method further comprises normalising the first and second received powers to a respective normalised power (see equation XCVIII). Optionally, determining the first received power and determining the second received power each comprise calculating a mean of the square of the module of a set of samples in the respective dataset.

When the number of datasets is two (when two receivers are in use) and thus the number of dataset pairs is one, the signal component power of the first filtered dataset and the signal component power of the second filtered dataset can be assumed to be the same, and thus both equal to the peak value of the correlation function, simplifying this part of the processing. When the number of datasets is three, there are three pairs of datasets, and when the number of datasets is four there are six pairs of datasets.

Optionally at step 1070, the method further comprises determining, based upon the respective computed sum of the signal component power of the first filtered dataset and the signal component power of the second filtered dataset, a respective Effective Signal to Noise Ratio (ESNR) value of the respective pair of datasets (see equations LXX to CIII). Optionally, the respective ESNR value is further based upon the respective peak of the correlation function, and on a ratio of the predetermined frequency range over an estimated data symbol rate that is based upon the predetermined frequency range. Optionally, the estimated data symbol rate is, at most, half of the predetermined frequency range (e.g. half of the channel bandwidth).

Optionally at step 1080, the method further comprises using the determined respective ESNR values to determine a Standard Deviation Error of TDOA, FDOA and/or DRDOA calculations that are based upon the first and second datasets of the respective pair. Optionally, then at step 1090, the respective Standard Deviation Errors are used to generate a whitening function that is usable to whiten the respective TDOA, FDOA and/or DRDOA calculations such that they have a zero mean Gaussian error distribution with a homoscedastic error covariance matrix. Such a whitening function can be used as described under the section titled "Acceleration Based Difference of Arrival" with the advantages described therein.

The above-described method, described with reference to Figure 10 and equations LXX to CIII, provides for estimation of transmitter power without a-priori knowledge, and this is useful for determining what type of transmitter the signal source is, which in turn is useful for cross-checking the estimated signal source location.

Further advantages and technical effects of aspects and embodiments, including those mentioned above, will be apparent to a skilled person from the foregoing description and from the Figures.

It will be appreciated that the above-described methods can advantageously be performed at a ground controller station such as a GMS 300. However, it is envisaged that due to the efficiency savings provided by the techniques described herein, such methods could be performed at one or more of the plurality of vehicles, and/or at a separate vehicle. It will be appreciated that the above-described methods can be executed in a system, wherein the system includes a plurality of vehicles, each vehicle having means for successively sampling a property of an electromagnetic signal (e.g. a radio signal or a light signal) as received at the respective vehicle to produce a respective sample stream comprising a plurality of data values, and each vehicle also having means for receiving an GNSS (or equivalent) signal and adding timestamp information to the respective sample stream based on the GNSS (or equivalent) signal. By way of example, each of the vehicles can be one of a spacecraft, an airborne vehicle, and a marine-based vehicle, in any combination. In such a system, the timestamp information includes at least one timestamp, each timestamp indicating the time (and optionally the date) at which a corresponding one of the data values was sampled by the vehicle. Such a system also preferably includes a location estimator (otherwise termed or comprising a location processing unit) such as GMS 300 (comprising data alignment module 320 arranged to align the sample streams, and location processing module 330 arranged to estimate location based on the aligned sample streams) comprising one or more processors that are arranged to carry out all or a part of the above-described method.

It will be appreciated that the described methods can be carried out by one or more computers or controllers, having one or more processors, under control of one or more computer programs arranged to carry out said methods, said computer programs being stored in one or more memories and/or other kinds of computer-readable media. An example of a networked computer system which can be used to implement the methods described herein will now be described, said computer system comprising one or more cloud servers incorporating one or more databases and hosting one or more web-based applications, one or more gateways, and one or more computing devices (such as a PC, tablet and/or mobile device) for accessing said web application, wherein said cloud servers and said computing devices are communicatively coupled with each other by a computer network. Said computer network can comprise one or more of any kinds of computer network suitable for transmitting or communicating data, for example a local area network, a wide area network, a metropolitan area network, the Internet, a wireless communications network, a cable network, a digital broadcast network, a satellite communication network, a telephone network, etc. Each of the one or more gateways, cloud servers and/or computing devices can operate under control of one or more computer programs arranged to carry out all or a subset of method steps described with reference to any embodiment, thereby interacting with one another so as to collectively carry out the described method steps. Each of the one or more gateways, cloud servers and/or computing devices can comprise a processor, memory, computer-readable storage medium, output interface, input interface and network interface, which can communicate with each other by virtue of one or more data buses. It will be appreciated that one or more of these features may be omitted, depending on the required functionality of said system. Said computer-readable storage medium may be any form of non-volatile and/or non-transitory data storage device such as a magnetic disk or optical disk, or other memory device such as RAM or ROM or Flash memory, and may store data, application program instructions according to one or more embodiments of the disclosure herein, and/or an operating system. The storage medium may be local to the processor, or may be accessed via a computer network or bus. The processor can be any apparatus capable of carrying out method steps according to embodiments of the invention, and can for example comprise a single data processing unit or multiple data processing units operating in parallel or in cooperation with each other, and/or can be implemented as a programmable logic array, graphics processor, or digital signal processor, or a combination thereof. The input interface is arranged to receive input from a user and provide it to the processor, and can comprise, for example, a mouse (or another pointing device), a keyboard and/or a touchscreen device. The output interface optionally provides a visual, tactile and/or audible output to a user of the system, under control of the processor.

It will be appreciated that the above-described partitioning of functionality can be altered without affecting the functionality of the methods and systems, or their advantages/technical effects. The above-described functional partitioning is presented as an example in order that the invention can be understood, and is thus conceptual rather than limiting, the invention being defined by the appended claims. The skilled person will also appreciate that the described method steps may be combined or carried out in a different order without affecting the advantages and technical effects resulting from the invention as defined in the claims. It will be further appreciated that the described functionality can be implemented as hardware (for example, using field programmable gate arrays, ASICs or other hardware logic), firmware and/or software modules, or as a mixture of those modules. It will also be appreciated that, a computer-readable storage medium and/or a transmission medium (such as a communications signal, data broadcast, communications link between two or more computers, etc.), carrying a computer program arranged to implement one or more aspects of the invention, may embody aspects of the invention. The term "computer program," as used herein, refers to a sequence of instructions designed for execution on a computer system, and may include source or object code, one or more functions, modules, executable applications, applets, servlets, libraries, and/or other instructions that are executable by a computer processor.

Various modifications may be made to the preferred embodiments described herein without departing from the scope of the invention as defined by the accompanying claims. Many combinations, modifications, or alterations to the features of the above embodiments will be readily apparent and are intended to form part of the disclosure. Any of the features described specifically relating to one embodiment or example may be used in any other embodiment by making appropriate changes as apparent in the light of the above disclosure.

**Claims**

1.  A computer-implemented method of determining the power of an electromagnetic signal emission, the method comprising

    obtaining a plurality of datasets each comprising a plurality of successive samples of the electromagnetic signal as received at a corresponding receiver, and
    for each of one of more pairs of the datasets:

      determining a first received power being that of a first dataset of the respective pair;
      determining a second received power being that of a dataset of the respective pair;
      ensuring that the signals represented in the first and second datasets of the respective pair are band-pass filtered according to a predetermined frequency range, thereby obtaining first and second filtered datasets;
      determining a respective peak of a correlation function between the first and second filtered datasets, wherein determining the respective peak comprises searching for a maximum of the correlation function while varying at least a time offset between samples of the first filtered dataset and samples of the second filtered dataset; and
      determining, based on the respective peak value of the correlation function, a respective sum of a signal component power of the first filtered dataset and a signal component power of the second filtered dataset.

2.  The method of claim 1, wherein the method further comprises normalising the first and second received powers to a respective normalised power.

3.  The method of any preceding claim, wherein determining the first received power and determining the second received power each comprise calculating a mean of the square of the module of a set of samples in the respective dataset.

4.  The method of any preceding claims, wherein determining the respective peak of the correlation function comprises searching for a maximum of the correlation function while also varying a frequency offset between samples of the first filtered dataset and samples of the second filtered dataset.

5.  The method of any preceding claim, wherein the method further comprises determining, based upon the respective computed sum of the signal component power of the first filtered dataset and the signal component power of the second filtered dataset, a respective Effective Signal to Noise Ratio (ESNR) value of the respective pair of datasets.

6.  The method of claim 5, wherein the respective ESNR value is further based upon the respective peak of the correlation function, and on a ratio of the predetermined frequency range over an estimated data symbol rate that is based upon the predetermined frequency range.

7.  The method of any preceding claim, wherein the number of datasets is two, and the number of dataset pairs is one, and optionally wherein the signal component power of the first filtered dataset and the signal component power of the second filtered dataset are assumed to be the same and both equal to the peak value of the correlation function.

**8.** The method of any preceding claim, wherein the method further comprises using the respective ESNR values to determine a Standard Deviation Error of TDOA, FDOA and/or DRDOA calculations that are based upon the first and second datasets of the respective pair, wherein optionally the respective Standard Deviation Errors are used to generate a whitening function that is usable to whiten the respective TDOA, FDOA and/or DRDOA calculations such that they have a zero mean Gaussian error distribution with a homoscedastic error covariance matrix.

**9.** The method of any preceding claim, wherein each dataset is obtained from a respective vehicle having a receiver for receiving the electromagnetic signal.

**10.** The method of any preceding claim, wherein the predetermined frequency range is a channel bandwidth value, and optionally wherein the channel bandwidth value is a marine communications channel bandwidth value, and optionally wherein the channel bandwidth value is 25kHz.

**11.** The method of any of claims 6 to 10, wherein the estimated data symbol rate is, at most, half of the predetermined frequency range.

**12.** A computer system comprising one or more processors, the one or more processors configured to carry out a method according to any preceding claim.

**13.** A system comprising the computer system of claim 12, and further comprising receiving apparatus for receiving the plurality of datasets from respective ones of a plurality of vehicles, and optionally further comprising the plurality of vehicles wherein:

each of said plurality of vehicles is capable of receiving and sampling the electromagnetic signal, wherein a respective one of the plurality of datasets comprising the sampled electromagnetic signal is transmitted by the respective vehicle to a processing unit and/or
each of said vehicles is capable of being controlled to move in a respective path, and optionally wherein the path is an orbital path around the Earth; and/or
each of said vehicles is capable of determining its position, and the respective one of the plurality of datasets further comprises the respective determined position.

**14.** A computer program product comprising instructions which when executed by one or more processors causes the one or more processors to carry out a method in accordance with any of claims 1 to 11.

**15.** A computer-readable medium storing instructions which when executed by one or more processors causes the one or more processors to carry out a method in accordance with any of claims 1 to 11.

110b

110a

110d

100

110c

120b

120a

Figure 1

Figure 2

**GMS high level architecture**

Figure 3

**Channels within the VHF Frequency Band.**

Figure 4

Figure 5

| 610 | Obtaining a first dataset of a plurality of datasets, comprising successive samples representative of a signal received at a first one of a plurality of vehicles. |

| 620 | Obtaining a second dataset of a plurality of datasets, comprising successive samples representative of a signal received at a second one of a plurality of vehicles. |

| 630 | Comparing the first dataset and the second dataset using a correlation function that relates each of a plurality of candidate adjustment factors to a respective degree of correlation between (i) the first dataset and (ii) the second dataset as adjusted by the respective candidate adjustment factor. |

| 640 | Selecting an adjustment factor from the plurality of candidate adjustment factors, wherein selecting comprises searching for an adjustment factor that at least locally maximises the correlation function, and searching comprises multiple search iterations, wherein in each search iteration a maximum of two adjustment factor values are varied, and optionally a first iteration determines initial estimates of a time offset value and a frequency offset value for subsequent candidate adjustment factors. |

| 650 | Optionally, in a second iteration, determining a first refined estimate of frequency offset using the initial estimates of time and frequency offset. |

| 660 | Optionally, in a third iteration, determining a second refined estimate of frequency offset using the initial estimate of time offset and the first refined estimate of frequency offset. |

| 670 | Optionally, in a fourth iteration, determining a refined estimate of time offset using the initial estimate of time offset and the second refined estimate of frequency offset. |

**Figure 6**

Figure 7

Figure 8

910 | Obtaining a first set of equations that, for each of a plurality of receivers of the electromagnetic signal, relate time of arrival (TOA), frequency of arrival (FOA), and Doppler rate of arrival (DROA), to a range between the source and the particular one of the plurality of receivers.

920 | Selecting a candidate source location in three-dimensional space

930 | Obtaining a second set of equations by transforming each of the first set of equations based on a displacement vector.

940 | Based on the second set of equations, obtaining a set of difference equations comprising, for each of a number of pairs of the receivers, respective equations representing TDOA between the pair, FDOA between the pair, and DRDOA between the pair.

950 | Obtaining a plurality of datasets comprising successive data samples representative of an electromagnetic signal as received at a respective receiver, and optionally known positions versus time for that receiver.

960 | Comparing pairs of the datasets to measure TDOA, FDOA and DRDOA

970 | Solving the difference equations by searching for a displacement vector that minimises a cost function representing error between measured TDOA, FDOA and DRDOA values, and calculated TDOA, FDOA and DRDOA.

980 | Iterating to refine an estimate of a location of a source of the signal.

Figure 9

| 1010 | Obtaining a plurality of datasets each comprising a plurality of successive samples of the electromagnetic signal as received at a corresponding receiver, and carrying out the following steps for each pair of the datasets. |

| 1020 | Determining a received power of a first dataset of the pair. |

| 1030 | Determining a received power of a second dataset of the pair. |

| 1040 | Ensuring that signals represented by the first and second datasets have been band-pass filtered, thereby obtaining filtered datasets. |

| 1050 | Determining a respective peak of a correlation function between the first and second filtered datasets, wherein determining the respective peak comprises searching for a maximum of the correlation function while varying at least a time offset between samples of the first filtered dataset and samples of the second filtered dataset. |

| 1060 | Determining, based on the peak value of the correlation function, a sum of a signal component power of the first filtered dataset and a signal component power of the second filtered dataset. |

| 1070 | Optionally, determining based upon the computed sum of signal component power, an Effective Signal to Noise Ratio (ESNR) of the pair of datasets. |

| 1080 | Optionally, using the ESNR to determine standard deviation errors of TDOA, FDOA and/or DRDOA calculations that are based on the datasets. |

| 1090 | Optionally, using the standard deviation errors to determine a whitening function for whitening TDOA, FDOA and/or DRDOA calculations. |

Figure 10

| | Europäisches Patentamt |
| European Patent Office |
| Office européen des brevets |

## EUROPEAN SEARCH REPORT

**Application Number**

EP 24 27 5098

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/201570 A1 (SHEMAR SETNAM LAL [GB] ET AL) 12 August 2010 (2010-08-12) * paragraphs [0020], [0038]; figures 1,5 * | 1-15 | INV. G01S5/02 G01S5/06 |
| | ----- | | ADD. |
| X | CLEMENTS ZACHARY ET AL: "Dual-Satellite Geolocation of Terrestrial GNSS Jammers from Low Earth Orbit", 2023 IEEE/ION POSITION, LOCATION AND NAVIGATION SYMPOSIUM (PLANS), IEEE, 24 April 2023 (2023-04-24), pages 458-469, XP034358024, DOI: 10.1109/PLANS53410.2023.10140058 [retrieved on 2023-06-08] * Section II * | 1-15 | G01S5/00 |
| | ----- | | |
| A | US 2002/070889 A1 (GRIFFIN CHRISTOPHER [GB] ET AL) 13 June 2002 (2002-06-13) * the whole document * | 1-15 | |
| | ----- | | |
| A | BAKER ZACHARY K ET AL: "Aperture synthesis from free-flying collectors without accurate metrology", 2018 IEEE AEROSPACE CONFERENCE, IEEE, 3 March 2018 (2018-03-03), pages 1-8, XP033365523, DOI: 10.1109/AERO.2018.8396791 [retrieved on 2018-06-25] * the whole document * | 1-15 | **TECHNICAL FIELDS SEARCHED (IPC)** G01S |
| | ----- | | |
| | -/-- | | |

The present search report has been drawn up for all claims

| Place of search | Date of completion of the search | Examiner |
|---|---|---|
| Munich | 28 January 2025 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................
& : member of the same patent family, corresponding document

EPO FORM 1503 03.82 (P04C01)

page 1 of 2

| | Europäisches Patentamt |
| | European Patent Office |
| | Office européen des brevets |

# EUROPEAN SEARCH REPORT

**Application Number**

EP 24 27 5098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WATSON WILLIAM ET AL: "4D CAF for localization of co-located, moving, and RF coincident emitters", MILCOM 2016 - 2016 IEEE MILITARY COMMUNICATIONS CONFERENCE, IEEE, 1 November 2016 (2016-11-01), pages 948-951, XP033028258, DOI: 10.1109/MILCOM.2016.7795452 [retrieved on 2016-12-22] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 28 January 2025 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 27 5098

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | Publication date | Patent family member(s) | | Publication date |
|---|---|---|---|---|
| US 2010201570 A1 | 12-08-2010 | EP | 2193387 A1 | 09-06-2010 |
| | | JP | 2010540922 A | 24-12-2010 |
| | | US | 2010201570 A1 | 12-08-2010 |
| | | WO | 2009040500 A1 | 02-04-2009 |
| US 2002070889 A1 | 13-06-2002 | AR | 025074 A1 | 06-11-2002 |
| | | AT | E305615 T1 | 15-10-2005 |
| | | AU | 768011 B2 | 27-11-2003 |
| | | BR | 0013412 A | 30-04-2002 |
| | | CA | 2380802 A1 | 01-03-2001 |
| | | CN | 1370279 A | 18-09-2002 |
| | | DE | 60022889 T2 | 08-06-2006 |
| | | EP | 1204882 A1 | 15-05-2002 |
| | | HK | 1047473 A1 | 21-02-2003 |
| | | JP | 4782336 B2 | 28-09-2011 |
| | | JP | 2003507747 A | 25-02-2003 |
| | | KR | 20020029928 A | 20-04-2002 |
| | | MX | PA02001697 A | 15-10-2003 |
| | | US | 2002070889 A1 | 13-06-2002 |
| | | WO | 0114902 A1 | 01-03-2001 |
| | | ZA | 200200799 B | 25-06-2003 |

EPO FORM P0459

For more details about this annex : see Official Journal of the European Patent Office, No. 12/82